(19) Europäisches Patentamt
European Patent Office
Office européen des brevets

(11) EP 4 353 084 A1

(12) **EUROPEAN PATENT APPLICATION**

(43) Date of publication:
**17.04.2024 Bulletin 2024/16**

(21) Application number: **22382959.9**

(22) Date of filing: **10.10.2022**

(51) International Patent Classification (IPC):
***A01P 1/00*** *(2006.01)* ***A01N 65/00*** *(2009.01)*
***A01P 7/00*** *(2006.01)*

(52) Cooperative Patent Classification (CPC):
**A01N 65/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kimitec Biogroup S.L**
**Vicar, Almeria (ES)**

(72) Inventors:
- **SANTANA MÉRIDAS, Omar**
  **Almeria (ES)**
- **MARTÍN BEJERANO, María**
  **Almería (ES)**

(54) **BIOPESTICIDE COMPOSITION WITH SYNERGISTIC EFFECT AND METHOD FOR COMBATING AND CONTROLLING PESTS**

(57) Biopesticide composition with synergistic effect based on an essential oil and a terpene component, preferably geraniol, which is effective against *Tetranychus urticae.* Biopesticide composition presents activity in all stages of mites and a short-estimated time, with non-toxic mode of action, and reduced application rates for each component. Biopesticide composition is used to combat and control pests in crops. The present invention also provides a method for combating and controlling pests.

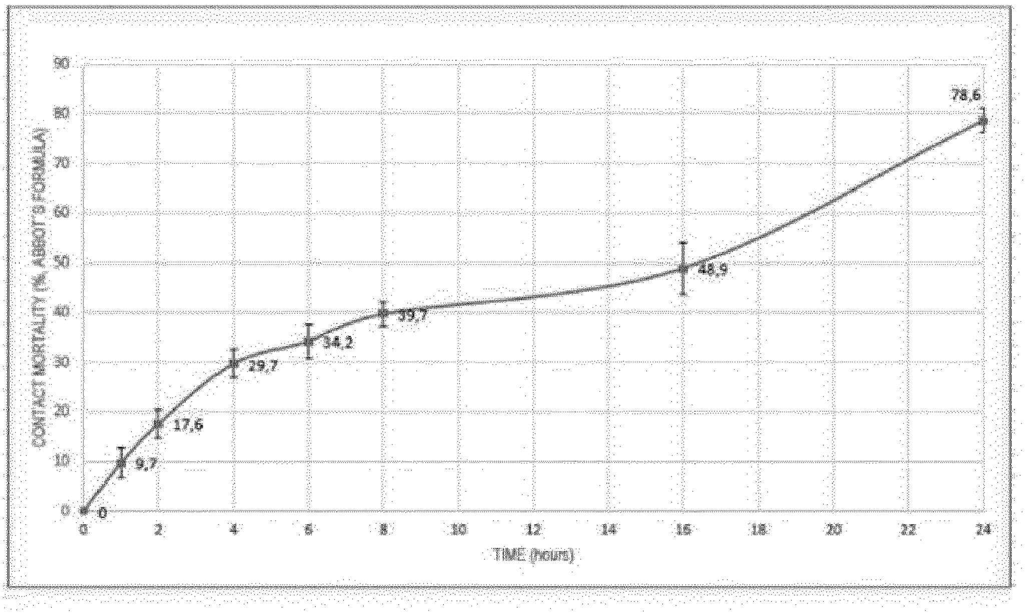


Fig.7

EP 4 353 084 A1

## Description

### Technical Field

The present invention relates to a synergistic composition for use as a biopesticide, in particular to an acaricide adapted to be used in organic and/or conventional agriculture. The synergistic effect of active principles allows for satisfactory control at reduced application rates for each component. The present invention relates to a method for controlling and combating pest in the agricultural field.

### Background Art

A pest is any species, strain or biotype of plant, animal, or pathogenic agent injurious to plants or plant products or harmful to humans. The term is particularly used for creatures that damage crops, livestock, and forestry or cause a nuisance to people, especially in their homes. Agricultural and horticultural crops are attacked by a wide variety of pests, the most important being insects, mites, nematodes, and gastropod mollusks. The damage that they do results both from the direct injury that cause to the plants and from the indirect consequences of the fungal, bacterial, or viral infections that transmitted by them.

*Tetranychus urticae* Koch (Acari:Tetranychidae) also known as red spider mite or two-spotted spider mite (TSSM) is included in the Invasive Species Compendium (ISC) of CABI (https://www.cabi.org/isc/datasheet/53366). TSMM is one of the most economically important pests of fruits, vegetables, and ornamental plants worldwide. It is had been reported to attack more than 1200 species of plant being the most polyphagous in the *Tetranychidae* family. According to Arthropod Resistance Database more than 500 cases of acaricide resistance have been reported for this species comprising more than 90% of spider-mites resistance (https://www.pesticideresistance.org/search.php). It can feed on most vegetables and food crops such as: peppers, tomatoes, potatoes, cucumbers, beans, maize, and strawberries; and ornamental plants such as roses. It lays its eggs on the leaves, causing direct effect to host plants including tiny pale spots or scars on the leaf due to chlorophyll loss, defoliation, necrosis in young leaves. Although the individual lesions are very small, attack by hundreds or thousands of spider mites can cause thousands of lesions, thus can significantly reduce the photosynthetic and transpiration capability of plants, and finally death.

The economic impact of *Tetranychus urticae* on high-value horticultural crops is enormous, causing direct damages by feeding on fruit and a cosmetic blemish. The two spotted spider mite is a serious pest of tomatoes (*Solanum lycopersicon* L.) in central and western North Carolina (Meck et al., 2009), has also been reported for strawberries, *Fragaria x ananassa* Duchesne (Wyman et al., 1979; Walsh et al., 1998), greenhouse-grown cucumbers, *Cucumis sativus* L. (Park and Lee, 2005). and soybean (*Glycine max* (L.) Merr.) (G. Padilha et al. 2020). Therefore, red spider mite is an important pest, treatment against this pest can be found; organic sprays, such as natural pyrethrum (e.g. Bug Clear Gun for Fruit & Veg, Neudorff Bug Free Bug and Larvae Killer), fatty acids (e.g. Solabiol Bug Free, Doff Greenfly & Blackfly Killer) or plant oils (e.g. Vitax Plant Guard Pest & Disease Control, Bug Clear for Fruit and Veg) can give some control of red spider mite, but it has developed a resistance to the active ingredient of some of these various.

These pesticides have a very short persistence and so may require reapplication to keep red spider mite numbers in check. Plant oils and fatty acids-based products are less likely to affect larger insects such as ladybird adults, as they are currently commercialized.

One side, the biological activity of eucalyptus oil with acaricidal properties of *Eucalyptus* sp. oils (including *E. globulus*) are attributed to the major compounds detected in the oil: Eucalyptol (1,8 cineole) and Limonene (Badawy et al., 2010; Camilo et al., 2017; Abdelgaleil et al., 2019; Aissaoui et al., 2019; Saroj et al., 2020). EP 0869714 provides for a method for controlling mites, lepidopteran, fungal and bacterial infestations in colonies of honeybees, which comprises the application of an effective amount of an essential oil, wherein eucalyptus oil is claimed such as a compound. Furthermore, a method for the control of mites, lepidopteran, fungal, and bacterial infestations of honeybee colonies, and infestation controlling compositions suitable for such purpose.

On the other side, the biopesticide effect of the terpenes are also known, (Badawy et al. 2010) the acaricidal activity of 12 monoterpenes against the two-spotted spider mite, *Tetranychus urticae* Koch. Each terpene is, individually, tested using fumigation and direct contact application methods. (Lamy, et al 2016).

Use of volatile organic compounds (VOCs) derived from plants to manipulate insect pest behavior can be applied in an integrated pest management strategy (IPM) using a combination of attractive and repulsive stimuli. The effect of five synthetic VOCs (dimethyl disulfide, linalool, geraniol, eucalyptol and citronellol) on the oviposition of the cabbage root fly *Delia radicum.*

However, herein no hints towards synergistic plant health effects are given. The synergistic effect between essential oil and a monoterpene, used as a biopesticide against *Tetranychus urticae* and other pests are not disclosure in the state of art.

## Summary of invention

The present invention provides biopesticide composition used to combat and control pests in crops. The synergistic effect into the biopesticide composition is described in the present invention for releasing an effective amount of essential oil and a monoterpene component. Furthermore, the biopesticide composition comprises inert and/or co-formulants components selected from a group consisting of emulsifiers, spreaders, penetrants, wetting, silicone-based nonionic surfactants, and water.

Several extraction methods have been described for the obtention of bioactive extracts, essentials oils and/or its respectively fractions. They can be classified as conventional methods (maceration, infusion, percolation, decoction, reflux extraction, Soxhlet extraction, liquid-liquid extraction, solid-liquid extraction, solvent extraction, hydrodistillation, steam distillation) and advanced methods (ultrasound assisted extraction, enzyme-assisted extraction, microwave-assisted extraction, pulsed electric field assisted extraction, supercritical fluid extraction, pressurized liquid extraction and colloid mill-based systems) (Adaramola and Onigbinde, 2017; Zhang et al., 2018). Solvent extraction (for the most of plant extracts) and distillation (specific for a wide range of essential oils) are the most used and accepted in pharmacopoeias for the obtention of natural products. Most common solvents used for active component extraction are water, isopropanol, ethanol and/or water: ethanol mixtures (hydroalcoholic mixtures), methanol, chloroform, hexane, ether, and acetone are also used, depending on raw materials and compounds that want to be obtained.

In some embodiment any of the mentioned methods may be used to extract the essential oil is selected from a group consisting of species *Aframomum corrorima, Alpiniae zerumbet, Alpinia officinarum, Alpinia zerumbet, Alpinia galanga, Artemisia tridentata, Artemisia vulgaris, Artemisia annua, Artemisia californica, Artemisia maritima, Baeckea frutescens, Callistemon viminalis, Cannabis sativa, Cannabis indica, Cannabis ruderalis, Cinnamomum camphora, Curcuma amada, Curcuma aromatica, Curcuma longa, Elettaria cardamomum, Eucalyptus cneorifolia, Eucalyptus dives, Eucalyptus dumosa, Eucalyptus flocktoniae, Eucalyptus globulus, Eucalyptus goniocalyx, Eucalyptus horistes, Eucalyptus kochii, Eucalyptus leucoxylon, Eucalyptus largiflorens, Eucalyptus mitcheliana, Eucalyptus oleosa, Eucalyptus oblonga, Eucalyptus polybractea, Eucalyptus radiata, Eucalyptus rossii, Eucalyptus sideroxylon, Eucalyptus smithii, Eucalyptus staigeriana, Eucalyptus spathulata, Eucalyptus tereticornis, Eucalyptus viridis, Hedychium coronarium, Helichrysum gymnocephalum, Hyptis suaveolens, Kaempferia galanga, Laurus nobilis, Melaleuca alternifolia, Melaleuca armillaris, Melaluca alternifolia, Melaleuca leucandendra, Mentha arvensis, Mentha pulegium, Myrtus communis, Ocimum basilicum, Ravensara aromatica, Rosmarinus officinalis, Salvia lavandulifolia, Salvia officinalis, Satureja montana, Thryptomene saxicola Turnera diffusa, Umbellularia californica* and *Zingiber officinale.*

In some embodiment of the present invention, the terpene component is selected from a group consisting of anethole, b-ionone, borneol, camphor, carene, carotene, carvacrol, carvacrol acetate, carveol, carvone, caryophyllene, caryophyllene oxide chysanthenol, cinnamaldehyde, cis-verbenol, citronellol, citronellal, citral, cinnamic acid, cinnamyl alcohol, dihydrocarveol, eugenol, farnesol, geraniol, geranial, linalool, linalyl acetate, menthol, methyl cinnamate, myrcene, myrtenol, nerol, neral, nerolidol, patchouli alcohol, perillyl alcohol, phytol, pinene, pulegone, squalene, terpineol, thymol, thymol acetate, thymoquinone, and tocotrienol.

In another embodiment, the terpene component is preferably geraniol that is obtained by one of the following methods:

(1) Selective hydrogenation of citral (synthesis from natural precursors)
(2) Distillation from crude geraniol (biobased)
(3) Natural-based (isolation and purification from *Citronella* in two-step process:

a. Distillation of *Citronella* leaves
b. Fractional distillation of *Citronella* oil

(4) From any microorganism that produce geraniol through a fermentation process

In another embodiment, the terpene component is preferably carvacrol that is obtained by one the following methods:

(1) Chemical synthesis such as fusion of cymol sulfonic acid with caustic potash, or action of nitrous acid on 1-methyl-2-amino-4-propyl benzene, heating of camphor and iodine or carvol with glacial phosphoric acid, dehydrogenation of carvone with a palladium-carbon catalyst or by transalkylation of isopropylated cresols.

(2) Extracted from essential oil selected from the following group of species; *Citrus aurantium bergamia, Lavandula multifida, Lavandula pubescens, Lepidium flavum, Lippia graveolens, Monarda didyma, Nigella sativa, Origanum compactum, Origanum dictamnus, Origanum microphyllum, Origanum minutiflorum Origanum onites, Origanum*

*scabrum, Origanum syriacum, Origanum vulgare, Plectranthus amboinicus, Thymus glandulosus, Thymus vulgaris, Thymus capipatus, Thymus zygis, Thymus serpyllum,* and *Zataria multiflora.*

In a preferred embodiment, the biopesticide composition comprises:

- *Eucalyptus globulus* essential oil,
- geraniol and
- Inert components selected from a group consisting of emulsifiers, spreaders, penetrants, wetting, silicone-based non-ionic surfactants, and water.

In another preferred embodiment, the biopesticide composition comprises:

- *Ocimum basilicum* oil,
- Carvacrol, and
- Inert components selected from a group consisting of emulsifiers, spreaders, penetrants, wetting, silicone-based non-ionic surfactants, and water.

The emulsifier is one or more selected from acrylic derivatives such as methacrylates and others, albumin, alkylphenol polyoxyethylene ether, benzyl alcohol, copolymers of vinyl acetate, polyoxyethylene fatty acid ester, glycerol, glycols, fatty alcohol polyoxyethylene ether, lecithins, mannitol, monoglyceride stearate, polyalkylene oxide block copolymer, polyethylene, polyglycerin fatty acid ester, polyoxyethylenated sorbitan esters, polyoxyethylene ether, polyvinyl alcohols, polyvinylpyrrolidone, sodium carboxymethylcellulose, sorbitan ester, sorbitan fatty acid, sorbitol, styrylphenol, and sucrose ester.

The silicone-based non-ionic surfactant is one or more selected from modified polydimethylsiloxanes, organosilicones, polyalkylene modified heptamethyl trisiloxanes, polyalkylene oxide-modified dimethylpolysiloxanes, polyalkylene oxide-modified heptamethyl trisiloxanes, polyoxypropylene-polyoxyethylene block copolymers, polyether-polymethylsiloxane-copolymers, polyethoxylated dimethyl siloxanes, polymethylsiloxane copolymers, polyoxypropylene-polyoxyethylene block copolymers and silicone-polyether copolymers.

Some embodiment of the composition is in the form of a powder, a granule, a pellet, a gel, an aqueous suspension, a solution, or an emulsion. Said composition is applied in any stage of the plant life cycle; seed, germination, seedlings, vegetative development, reproductive development, pollination, and seed spreading stages.

Some embodiments of the invention, the composition is used to combat and control pests and treat diseases in crops. Such pests are caused by arthropods.

Some embodiments of the invention can be used to combat and control pests caused by arachnids such as *Abacarus* sp., *Aberoptus sp., Acalitus* sp., *Acanthonychus* sp., *Acaphylla sp, Acaphyllisa sp., Acaralox sp., Acarelliptus sp.,Acaricalus* sp., *Aceria* sp., *Achaetocoptes sp., Acritonotus* sp., *Aculochetus sp.,Aculodes sp., Aculops sp., Aculus sp., Adenoptus sp., Aequsomatus sp., Afronobia sp., Allonychus* sp., *Amphitetranychus sp., Anatetranychus, Anthocoptes* sp. *Aplonobia* sp., *Aponychus* sp., *Atetranychus* sp., *Atrichoproctus* sp., *Bariella* sp., *Beerella* sp, *Boczekiana* sp., *Brachendus* sp., *Brevinychus* sp, *Brevipalpus sp., Bryobia* sp., *Bryobiella* sp., *Bryocopsis* sp., *Calacarus* sp., *Calepitrimerus* sp., *Callyntrotus* sp., *Cecidophyes* sp., *Cecidophyopsis* sp., *Cisaberiptus sp.,Colomerus* sp., *Coptophylla* sp., *Cosetacus* sp., *Criotacus* sp., *Crotonella* sp. *Cupacarus* sp., *Cymoptus* sp., *Dasyobia* sp. , *Dichopelmus* sp., *Ditrymacus sp.,Dolichonobia* sp. *Duplanychus* sp. *Edella* sp., *Eonychus* sp., *Eotetranychus* sp., *Epitrimerus* sp., *Eremobryobia* sp., *Eriophyes* sp., *Eurytetranychoides* sp, *Eurytetranychus* sp., *Eutetranychus* sp., *Evertella* sp., *Gilarovella* sp., *Glyptacus* sp., *Hellenychus sp.,Hemibryobia* sp., *Hystrichonychus* sp, *Keiferella* sp, *Leipothrix* sp., *Lindquistiella* sp, *Liroella* sp. *Magdalena* sp., *Marainobia* sp., *Mesalox* sp., *Mesobryobia* sp., *Metaculus* sp., *Meyernychus* sp., *Mezranobia* sp., *Mixonychus* sp., *Monoceronychus* sp., *Monochetus* sp., *Mononychellus* sp., *Neooxycenus* sp., *Neoschizonobiella* sp., *Neotegonotus* sp., *Neotetranychus sp.,Neotrichobia sp.,Notonychus* sp., *Oligonychus* sp., *Oxycenus* sp., *Palmanychus* sp., *Panonychus* sp., *Parapetrobia* sp., *Paraphytoptus* sp., *Paraplonobia* sp., *Paraponychus* sp., *Peltanobia* sp., *Petrobia* sp., *Phyllocoptes* sp., *Phyllocoptruta* sp., *Platyphytoptus* sp., *Platytetranychus* sp., *Porcupinychus* sp., *Pseudobryobia* sp., *Reckella* sp., *Schizonobia* sp., *Schizonobiella* sp., *Schizotetranychus* sp., *Shevtchenkella* sp., *Sinobryobia* sp., *Sinotetranychus* sp., *Sonotetranychus* sp., *Stenacis* sp., *Strunkobia* sp., *Synonychus* sp., *Tauriobia* sp., *Tegolophus* sp., *Tegonotus* sp., *Tegoprionus* sp., *Tenuipalpoides* sp., *Tenuipalponychus* sp., *Tetra* sp., *Tetranychopsis* sp., *Tetranychus* sp., *Tetraspinus* sp., *Thamnacus* sp., *Toronobia* sp. *Tumescoptes* sp. *Vasates* sp. *Xinella* sp., *Yezonychus* sp., and *Yunonychus* sp.

Exemplary embodiments of the present invention demonstrate effectiveness against *Tetranychus urticae, Panonychys citri, Brevipalpus chilensis* and *Oligonychus yothersi.*

In another embodiment of the invention, the composition is used to combat and control pests in all animal life cycle, eggs, nymphs, and adults.

Some embodiment of invention provides a method of combating and controlling pests, which consists of applying a biopesticide composition for any uses described, either directly to the pests or to any kind of surfaces where the any pest nymphs and adults instar may contact by dripping, spraying and vaporization or otherwise be exposed to the biopesticide composition causing behavioral (antifeedant and/or repellent) effects on the pests (adults and/or immatures).

The synergistic effect provides in the present invention is advantageous with respect to the state of art. The amount used by each compound is less for a treatment than whether each compound would have used independently. Biopesticide effect (contact, repellency, antifeedant) is improved by mixing both compounds under described conditions. In addition, final formulation achieves a combinatory and improved mode of actions of the individual ingredients with a minimum risk of the occurrence of pest resistance. Due to the nature of active ingredients and the available supporting studies on its there is a minimum risk on bioaccumulation and negative effects on the health of humans and animals and stability of ecosystems.

**Brief description of drawings**

The present invention will now by further described with reference to the following, nonlimiting, examples, and figures in which:

**Figure 1. Diagram of the formulation reactor**
**Figure 2. Experimental set-up for topical application bioassay**
**Figure 3. Experimental set-up for in vitro antifeedant bioassay**
**Figure 4. Cage Bugdorm® view**
**Figure 5. Two plants in the same pot, one treated and the other untreated.**
**Figure 6. Four plants inside a cage.**
**Figure 7. Mortality "knock down" of *Eucalyptus* oil (1%w/v) on *Tetranychus urticae.***
**Figure 8: Mortality "knock down" of geraniol (1%w/v) on *Tetranychus urticae***
**Figure 9: Mortality "knock down" of biopesticide composition (0.06%w/v) on *Tetranychus urticae***
**Figure 10: Isobole curve for mortality by contact of active ingredients of biopesticide composition.**
**Figure 11: Isobole curve for antifeedant effect (repellent) of active ingredients of biopesticide composition.**
**Figure 12: Isobole analysis of blend *Satureja montana* oil: geraniol: isobologram for a combination of a given EC50 Satureja montana oil (A, abscissa) and EC50 geraniol (B, ordinate).**
**Figure 13: Isobole analysis of blend Ocimum basilicum oil: Carvacrol. Isobologram for a combination of a given EC80 of Ocimum basilicum oil (A, abscissa) and EC80 of Carvacrol (B, ordinate).**
**Figure 14: Vegetal material containing *Panonychus citri.***
**Figure 15: Efficacy of the composition for control of *Panonychus citri*: a) Pre-application, b) 1° day post-application c) 4° day post-application.**
**Figure 16: Plantules of grapevine containing *Brevapalpus chilensis.***
**Figure 17: Leaves of avocado containing *Olygonychus yothersi***

Description of embodiments

Unless otherwise defined, all terms of art, notations and other scientific terms or terminology used herein are intended to have the meanings commonly understood by those of skill in the art to which this invention pertains. In some cases, terms with commonly understood meanings are defined herein for clarity and/or for ready reference, and the inclusion of such definitions herein should not necessarily be construed to represent a substantial difference over what is generally understood in the art. Many of the techniques and procedures described or referenced herein are well understood and commonly employed using conventional methodology by those skilled in the art.

The singular form "a", "an", and "the" include plural references unless the context clearly dictates otherwise.

Antifeedant is defined as a substance that act on insect behavior deterring feeding, settling and oviposition.

Behavioral effect meaning in the present invention another type of mechanism of action of biopesticides, occurring when the composition causes change in animal behaviors such as repellency and antifeedant. It can be observed by disoriented movement of an animal organisms away from a stimulus probably due to the interactions of the active ingredients on olfactory and gustatory receptors.

Biopesticide: Environment Protection Agency from United States of America (EPA) defines biopesticides as certain types of biopesticides derived from natural materials such as animals, plants, bacteria, and certain minerals. Biopesticides include naturally occurring substances that control pests (biochemical pesticides), microorganisms that control pests (microbial pesticides), and pesticidal substances produced by plants containing added genetic material (plant-incorporated protectants) or PIPs.

According to EPA, Biopesticides fall into three major classes:

1. Biochemical pesticides are naturally occurring substances (or structurally similar synthetic substances) that control pests by non-toxic mechanisms. Conventional pesticides, by contrast, are generally synthetic materials that directly kill or inactivate the pest involving toxic effects on nervous system and digestive system.
2. Microbial pesticides consist of a microorganism (e.g., a bacterium, fungus, virus or protozoan) as the active ingredient. Microbial pesticides can control many kinds of pests, although each separate active ingredient is relatively specific for its target pest[s]. For example, there are fungi that control certain weeds and other fungi that kill specific insects.
3. Plant-Incorporated-Protectants (PIPs) are pesticidal substances that plants produce from genetic material that has been added to the plant. For example, scientists can take the gene for the *Bt* pesticidal protein and introduce the gene into the plant's own genetic material.

Blend; As used herein "the blend" "blend" or "blend of active ingredients" is defined as the combination of active ingredient claimed in the present invention.

Composition: as used herein "composition" is defined as a combination or blend of active ingredients and another compound, carrier, composition, or element inert (for example: surfactant or wetting).

Effective amount or dose, as used herein, is an amount sufficient to affect desired results. An effective amount can be administered in one or more applications. In terms of treatment, it is considered protection against pests.

"Essential oil", "oil "or "volatile essential oil", as used herein, is any oil derived from any part of a plant, and includes any compound purified or derived from a plant oil, such as a hydrophobic, volatile organic compound that is produced by a plant species. A plant essential oil used in composition as disclosed herein need not be isolated from a plant, for example, it may be chemically synthesized or isolated from a microorganism that produce the compound.

"Knock-Down", as used herein, is defined as any behavioral change (whether reversible or not) after exposure to a target compound and produce through a non-toxic mode/mechanism of action including lethal (physical contact) and non-lethal (repellent, antifeedant) effects"

"Physical effect" or "physical contact" meaning in the present invention as one type of mechanism of action of biopesticides, occurring when the composition in contact with organisms dissolving and/or disrupting cell membranes (osmotic shock) and suffocation, causing the death by not having enough oxygen due to the blockage of the tracheal system.

Settling inhibition is considered in the present invention as indirect repellent effect.

Synergy, as used herein, means an effect seen by a combination of compounds being greater than would have been expected from a consideration of individual contributions. This can be applied in the present invention to either an increased biopesticide effect or a reduced effective amount, preferably both.

Terpenes or terpenoids or isoprenoids, as used herein, are a class of natural products consisting of compounds with the formula $(C_5H_8)n$. Terpenes are further classified by the number of carbons, in the present invention terpenes can be indistinctly referred to monoterpenes ($C_{10}$).

One exemplary embodiment of the present invention, the biopesticide composition with synergistic effect comprises *Eucalyptus globulus* essential oil and geraniol as biopesticide components, both components are obtained by the following process:

## Example 1: Method of obtaining the essential oil and its characterization

Volatile components of *Eucalyptus globulus,* including the essential oil, can be obtained through conventional and advanced extraction methods. Conventional extraction methods include hydrodistillation, steam distillation, hydrodiffusion, solvent extraction (acetone, hexane, ethanol, methanol, petroleum ether, others). Applying maceration and/or reflux (e.g., Soxhlet). Advanced extraction methods comprise supercritical fluid extraction, microwave-assisted extraction and ultrasound assisted extraction.

One embodiment of the present invention, distillation method is used to obtain *Eucalyptus globulus* essential oil, that is extracted from fresh leaves and water as a unique solvent. Fresh leaves of *Eucalyptus globulus* were submitted to a vapour-pressure steam distillation in a stainless-steel distillation plant equipped with a 1,400kg distillation chamber working in a pressure range of 0.5-1.0 bar. Steam removes volatile fraction from the plant tissues and condensed into liquid through a condenser. Finally, essential oil is separated in a Florentine vessel.

Each manufactured batch *Eucalyptus globulus* oil is analyzed by Gas Chromatography Mass tandem Spectrometry (GC-MS-MS) using an Agilent 7890B Gas Chromatograph (Agilent Technologies, Palo Alto, CA, USA) coupled to an Agilent 7000D GC/TQ mass detector (electron ionization, 70 eV) (Agilent Technologies, Palo Alto, CA, USA).

## Example 2: Procedure to obtain geraniol and its characterization

One embodiment of present invention, the terpene is geraniol, it's obtained by citral as a precursor. Citral (CAS:

5392-40-5) has two isomers: Citral A (trans) or geranial and citral B (cis) or neral. Citral hydrogenation is used as a reaction model for the obtention of geraniol and other molecules. Citral (I) shows key reactive sites for hydrogenation of citral. Carbonyl group (a) hydrogenation yield isomers cis and trans of 3,7-dimethyll-6-octen-1-ol namely nerol and geraniol, respectively.

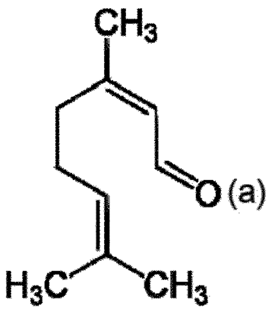

(I)

**Table 1: Raw materials used in the manufacturing process of geraniol**

| Product name/chemical name | CAS N° | Purity |
|---|---|---|
| Citral (Mix of isomers)<br>• *Trans*: 55-70%<br>• *Cis*: 30-45% | 5392-40-5 | 98.0% |
| Titanium dioxide (TiO2) | 13463-67-7 | 99.9% |
| Platinum (Pt) | 7440-06-4 | 99.9% |

Manufacturing process of geraniol (CAS 106-24-1) is carried out in a stainless batch reactor STR (Stirring Tank Reactor). **Table 1** shows adding Pt-TiO2 catalyst reduced at 300-500 °C (High Temperature Reduction) according to the methodology proposed by Rojas-Sarmiento et. al. (2005). The hydrogenation reaction, wherein (II) citral trans (III) citral cis, (IV) geraniol (95%) and (V) nerol (2%) is the following:

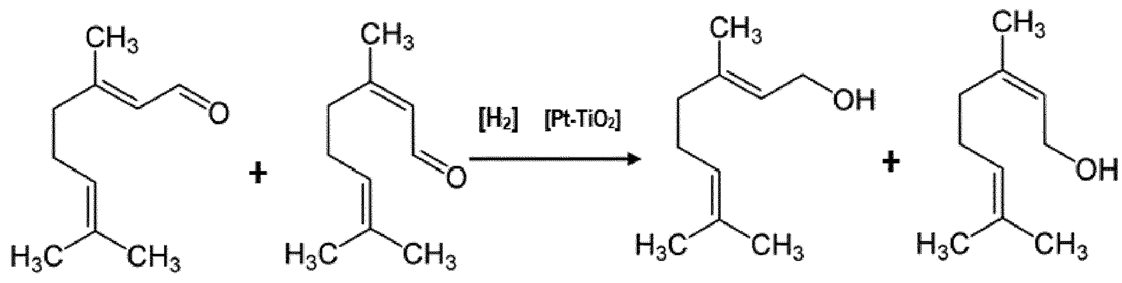


(II) (III) (IV) (V)

The detection of marker compounds in the process (geraniol) was performed through Gas Chromatography Mass tandem Spectrometry (GC-MS-MS). using an Agilent 7890B Gas Chromatograph (Agilent Technologies, Palo Alto, CA, USA) coupled to an Agilent 7000D GC/TQ mass detector (electron ionization, 70 eV) (Agilent Technologies, Palo Alto, CA, USA). The main ingredient after hydrogenation (trans-geraniol) is >= 95% purity. However, the hydrogenation of the two isomers of citral (raw material, Table 1) produce trans-geraniol (geraniol, >95%) and cis-geraniol (nerol, < 1.5%). No impurities regarding catalyzers ($TiO_2$ and Pt) are detected.

**Example 3 Procedure to obtain biopesticide composition**

One embodiment of the procedure for manufacturing the present invention is described. The composition is

made up of the following compounds divided in active and inert ingredients and in different concentrations. At a percentage to reach 100% of the composition total is added water.

**Table 2. Compounds of the composition**

| Compound | Ingredient | CAS number | Concentration w/v |
|---|---|---|---|
| *Eucalyptus* leaf oil | active | 8000-48-4 | 15.0% |
| Geraniol | active | 106-24-1 | 15.0% |
| Soy lecithin | inert | 8002-43-5 | 5.0% |
| Organosiloxane | inert | 67674-67-3 | 25.0% |
| Atlas G-5002L | inert | | 12.5% |

The process of manufacturing consists of the following sequential steps: First step, the composition is formulated in the reactor (Figure 1) carefully following the order of addition of the components Table 3. The reactor can be differentiated the following components: (a) stainless-steel tank of 650 liters of total volume and 560 liters of useful volume. It has a double jacket through which a heat transfer fluid can circulate that allows to control the temperature of the product that is inside the reactor by means of a PT 100 temperature probe. It has two stirrers, (b) Cowles type with a maximum speed of 1500 rpm and (c) High shear emulsifier with a maximum speed of 3000 rpm, both controlled by inverters that allow to regulate its turning speed. The tank is connected to (d) vacuum pump that can be used to eliminate air bubble in the product and prevent the formation of gas-liquid interfaces, it is also equipped with (e) inert gas injection system (for example nitrogen) to prevent work in the presence of oxygen that could deteriorate the product due to oxidation reactions. For pressure or vacuum control inside the reactor, there is a pressure gauge and vacuum gauge. In addition, the system is equipped with a CIP installation to proceed to its total cleaning automatically. The rotational speed parameters of each agitator and temperature of the product set out in Table 3. It is important to note that this formulation does not use any inert gas.

**Table 3. Order and general conditions fixed during the formulation**

| Ingredient | Stirrer/rpm | Vacuum inside tank | % (w/v) | Order | Time (min) | Product temperature |
|---|---|---|---|---|---|---|
| XIAMETER™ OFX-5211 Fluid | Cowles/1000 rpm | 760 mbar | 26.0 | 1 | 0 | 25°C |
| *Eucalyptus globulus* leaf oil | Cowles/700 rpm | 760 mbar | 15.0 | 2 | 10 | 25°C |
| Geraniol | Cowles/700 rpm | 760 mbar | 15.0 | 3 | 10 | 25°C |
| ATLAS G-5002L | Cowles /1000 rpm | 500 mbar | 12.5 | 4 | 10 | 35°C |
| Lecithin soy | Cowles/1000 rpm High shear emulsifier/1000 rpm | 500 mbar | 5.0 | 5 | 15 | 35°C |
| Water and continuous shaking | Cowles/700 rpm | 760 mbar | 26.5 | 6 | 30 | 25°C |

Second step is to analyze the composition manufactured by Gas Chromatography Mass tandem Spectrometry (GC-MS-MS), and Liquid Chromatography Mass tandem Spectrometry (LC-MS-MS). The main objective in this step is to determine the chemical identity of the formula through the identification of chemical compound previously defined. Other objective is to detect potential elemental impurities during the manufacturing process. Considering that the compounds of the composition are volatile essential oil and monoterpenes, we select GC-MS-MS as preferred analytical method to perform the quality control. The compounds coming from *Eucalyptus oil and* geraniol are clearly identified and quantified.

## Example 4: Biopesticide effects of the composition of the present invention

One embodiment of the described composition **(Table 2)** comprising the blend of active ingredients is tested for the control of the red spider mites (*Tetranychus* sp., *Eutetranychus* sp.) in food/agricultural and non-food crops. Mites

*(Tetranychus urticae)* of ten different populations of adults were collected from the same greenhouses in Almeria (South-eastern Spain). Adult mites (200 from each collecting site) were manually caught on the leaves of different crops (tomato, pepper, eggplant and zucchini), using an entomological brush. Mites pest "pool" was reared on healthy *Phaseolus vulgaris* (bean) plant and maintained in a "walk-in" type growth chamber at 25 (±2) °C, 60% relative humidity (RH), and a photoperiod of 16 h:8 h light: dark until its use.

A series of dilutions (1.0%, 0.5%, 0.1% and 0.05% weight/volume) of independent active ingredient *Eucalyptus* oil and geraniol **(Table 4)** were prepared from the original stock solutions (150 mg/ml) using a solution of TWEEN-80® (2%) in water as a carrier. In the same way, a composition comprising blends of active ingredients (*Eucalyptus oil* + geraniol) were prepared at (0.03%+0.03%), 0.06%+0.06%) and 0.09%+0.09%) using the same carrier.

By testing the biopesticide activity of the composition claimed in the present invention, bioassays have been done to evaluate the efficacy through the different mentioned mechanism of actions (MoAs). Bioassays were newly designed and/or adapted from the scientific literature Roh et al. (2011), El-Moneim et al. (2012), Brown, et al. (2017), Ruiz-Vásquez et al. (2019), Bakkali et al. (2019). And Rincón et al. (2019).

### 4.1 Contact mortality (Leaf Disc Method)

This bioassay is to evaluate the physical effect of different doses on the mortality of *Tetranychus urticae* (red spider mite) adults in a short/medium-term (0-24 hours) by topical application.

Tests were conducted in plastic net petri dishes (5 cm diameter) (Figure 2). (a) The bottom of the petri dish was covered with a thin (0.4 mm) layer of agar 12% (w/v). After 2 minutes, to cool agar, (b) bean (*Phaseolus vulgaris*) leaf discs (2 $cm^2$) were placed on the fresh agar surface (upper side up) and allowed to dry for 30 minutes. This provides a support and disc hydration along the experiment (24 h). Fifteen (c) *Tetranychus urticae* adults were placed on the upper surface of a bean leaf disc with a fine entomological brush. The mites were allowed to acclimate for 30 minutes. A total of 10 petri dishes for each treatment (individual active ingredients, blend of active ingredients, positive and negative controls) were used in each experiment and temporarily replicated 3 times along the week.

Each treatment (different doses of individual active ingredients, blend of active ingredients, and controls) was sprayed (50 μl) two times on the settled spider mites, covering all the disc surface in each petri dishes using a micro-atomizer. Closed and labeled bottles were incubated in a compact-type growth chamber at 25 (±2) °C, 60% relative humidity (RH), and a photoperiod of 16 h:8 h light: dark. Numbers of live and dead mite adults were counted at 24 h post-treatment. Mite adults were considered dead if no movement was apparent after probing with the tip of a fine brush under stereoscopic magnifying glass. Mortality percentage was calculated in treatment and control groups. If the mortality in negative control is above 20%, the test was discarded. When control mortality was greater than 5% but less than 20%, the observed mortality (%M) was corrected using Abbott's formula (Abbott, 1925):

$$\%\ \text{Corrected M}=\frac{X-Y}{100-Y}\ x$$

Where: X= Mortality (%) in the treatment; Y= Mortality (%) in the control

Means of %M were compared using a one-way analysis of variance (ANOVA, $p<0.05$) and LSD-test as a post hoc test to verify significant differences between single treatments using Statgraphics Centurion XVII software. When nonnormality in the data was detected, an additional Kruskal-Wallis test was conducted, and Box-and-Whisker Plot (Median Notch) was presented. Each active ingredient and the blend were tested in a dose-response experiment (3-5 serial dilutions) to calculate their relative potency ($EC_{50}$ and/or $EC_{90}$) from a linear regression analysis (%M on Log-dose). In addition, death mite adults were carefully observed under stereoscopic magnifying glass to differentiate the mechanisms of action involved in contact mortality such as: Blocking tracheal insect spiracles (suffocation) and effect on insect cuticle and/or membranes (osmotic shock).

**Table 4. Contact mortality of test items against *Tetranychus urticae***

| Treatments | N° | Dose % (w/v) | Mortality (%M) |
|---|---|---|---|
| *Eucalyptus* leaf oil | 1 | 0.05 | 36.4 ± 2.5 |
| | 2 | 0.10 | 51.4 ± 1.8 |
| | 3 | 0.50 | 55.3 ± 2.2 |
| | 4 | 1.0 | 73.4 ± 4.8 |
| | $EC_{50}$ (%, w/v) = 0.15 (0.11, 0.19) | | |

(continued)

| Treatments | N° | Dose % (w/v) | Mortality (%M) |
|---|---|---|---|
| geraniol | 5 | 0.10 | 18.1 ± 2.4 |
| | 6 | 0.50 | 28.2 ± 3.2 |
| | 7 | 1.0 | 43.9 ± 2.5 |
| | $EC_{50}$ (%, w/v) = 2.44 (1.24, 4.75) | | |
| Blend *Eucalyptus* oil: geraniol (Positive control, chemical) | 8 | 0.03 : 0.03 | 67.8 ± 2.6 |
| | 9 | 0.06 : 0.06 | 92.1 ± 1.6 |
| | 10 | 0.09 : 0.09 | 97.3 ± 0.8 |
| | 11 | 0.06 | 83.3 ± 2.4 |
| (Positive control, natural-based | 12 | 0.5 | 75.3 ± 2.9 |

The contact mortality on *Tetranychus urticae* adults tested for each active ingredient *(Eucalyptus* leaf oil and geraniol) and the blend used in this study. Table 4 shows the results, where %M is % of Mortality-Abbott corrected; Means within the same column followed by the same letter are not significantly different (ANOVA, Kruskall-Wallis, $p<0.05$).

*Eucalyptus* leaf oil showed significative contact mortality on *Tetranychus urticae* adults, highest dose tested of oil (1% w/w) reach a 73.4% of mite's mortality. Geraniol had low mortality with the same dose around 30% lower than *Eucalyptus.* As a result, the composition exhibited good performance at all doses tested, even being the concentration of doses lower than each active ingredient independently. In all cases, the efficacy (expressed as contact mortality, %M) of the blend is higher than each active ingredient independently.

**4.2 Antifeedant (feeding deterrents) effects**

The objective of this bioassay is to evaluate the effect of different doses of individual active ingredients and biopesticide composition on the settling behavior of *Tetranychus urticae.* It's based on the preference of mite adults for treated and non-treated bean (*Phaseolus vulgaris*) plants located in the same petri dishes (*in vitro* assays) or entomological cages (*in planta* assays):

• *In vitro* settling inhibition (leaf disc painting method)

Tests were conducted in plastic net petri dishes (5cm diameter) (Figure 3). The bottom of the petri dish was covered with a thin (0.4 mm) layer of agar 12% (w/v) (a). After 2 minutes to cool agar, bean (*Phaseolus vulgaris*) leaf discs (2 $cm^2$) were placed on the fresh agar surface (upper side up) and allowed to dry for 30 minutes. It provides a support and disc hydration along the experiment (24 h). Half of the discs were treated (T) with 20 μl of the individually active ingredients and the blend and the other half with water containing 2% TWEEN® 80 that was used as control (C). Fifteen *Tetranychus urticae* adults were placed on the middle of treated and untreated leaf discs and allowed to feed (24 h) in a compact-type growth chamber at 25 (±2) °C, 60% relative humidity, and a photoperiod of 16 h:8 h light: dark. A total of 10 petri dishes for each treatment were used in each experiment and temporarily replicated 3 times along the week.

**Table 5. *In vitro* antifeedant effects against *Tetranychus urticae***

| Treatments | N° | Dose % (w/v) | Settling inhibition (%SI) |
|---|---|---|---|
| *Eucalyptus* oil | 1 | 0.10 | 29.6 ± 4.6* |
| | 2 | 0.50 | 43.5 ± 5.1* |
| | 3 | 1.0 | 65.6 ± 3.8* |

(continued)

| Treatments | N° | Dose % (w/v) | Settling inhibition (%SI) |
|---|---|---|---|
| Geraniol | 4 | 0.02 | 31.1 ± 4.4* |
| | 5 | 0.05 | 47.5 ± 4.6* |
| | 6 | 0.10 | 70.6 ± 3.0* |
| | 7 | 0.50 | 75.3 ± 3.4* |
| | 8 | 1.0 | 82.9 ± 2.5* |
| Blend *Eucalyptus* oil: Geraniol | 9 | 0.03 : 0.03 | 62.5 ± 3.2* |
| | 10 | 0.06 : 0.06 | 83.1 ± 2.9* |
| | 11 | 0.09 : 0.09 | 90.6 ± 1.6* |
| (Positive control, chemical) | 12 | 0.06 | 52.1 ± 3.4* |
| (Positive control, natural-based | 13 | 0.5 | 83.9 ± 3.4* |

Settling inhibition studies are considered as indicator of repellent effects. **Table 5** shows in vitro antifeedant effects against *Tetranychus urticae* tested for each active ingredient *(Eucalyptus* leaf oil and geraniol) and the blend. %SI is settling inhibition index expressed as the effect of treatments on the mite's settling behavior. Geraniol showed stronger antifeedant effect than *Eucalyptus* leaf oil. As in contact mortality bioassays, composition showed the strongest antifeedant activity on *Tetranychus urticae* adults with low concentrations 0.06 % w/v and 0.09 %w/v when compared with individual doses of active ingredients. An asterisk (*) means statistically significancy.

• *In planta* settling inhibition (Whole Plant Direct Method)

The experiments were conducted in bugdorm®-type net cages (60x60x60 cm, 140 microns mesh) (Figure 4). By putting inside this, 14 cm diameter pots with two similar bean plants in two-leaf stage in each pot (Figure 5). One of the plants was sprayed with the composition of the present invention and the other with the control and allowed to dry for 30 minutes. Adult mites (up to 100) were released at the base of stems between the two plants (treated and untreated), so that they had to choose between two alternatives or remain walking and/or resting on the cage walk. A total of 5 cages for each treatment (four plant each) (Figure 6) and control were used in each experiment and replicated 3 times in different days. Closed and labeled cages were incubated in a "walk-in" type growth chamber at 25 (±2) °C, 60% relative humidity (RH), and a photoperiod of 16 h:8 h light: dark. After 24 hours the number of adults settled in treated and non-treated plants and the number of laid eggs were recorded on both side of blade in each leaf. Number of mites and eggs were counted under a stereomicroscope.

Settling inhibition index (%SI) was calculated according to the following formula:

$$\%SI = [1 - \left(\frac{T}{C}\right)] x\ 100$$

T= Settling of treated plants; C= Settling of control plants.

Oviposition inhibition index (%10) was calculated according to the following formula:

$$\%IO = [1 - \left(\frac{T}{C}\right)] x\ 100$$

T= laid eggs on treated plants; C= laid eggs on control plants.

Means of %SI and %10 were analyzed for significance by the non-parametric Wilcoxon signed-rank test ($p<0.05$). An asterisk (*) means statistically significancy.

**Table 6. *In planta* antifeedant effects against *Tetranychus urticae***

| Treatment | N° | Dose % (w/v) | Settling inhibition (%SI) | Oviposition inhibition (%IO) |
|---|---|---|---|---|
| *Eucalyptus* oil | 1 | 0.10 | 40.9 ± 4.6 | 52.8 ± 4.3* |
| | 2 | 0.50 | 52.8 ± 4.4 | 76.9 ± 2.3* |
| | 3 | 1.0 | 58.5 ± 5.8 | 81.6 ±2.4* |
| Geraniol | 4 | 0.10 | 57.7 ± 5.3 | 44.3 ± 3.7* |
| | 5 | 0.50 | 73.2 ± 2.6 | 72.1 ± 3.1* |
| | 6 | 1.0 | 76.1 ± 2.7 | 81.1 ± 2.1* |
| Composition *Eucalyptus* oil: Geraniol | 7 | 0.06 : 0.06 | 83.9 ± 2.2 | 89.2 ± 0.9* |
| (Positive control), chemical) | 8 | 0.06 | 57.3 ± 4.1 | 72.8 ± 2.5* |
| Positive control, natural-based | 9 | 0.5 | 73.6 ± 2.6 | 74.3 ± 2.3* |

**Table 6** shown the number of eggs as an indicator of egg-laying inhibition. It is important to note that egg-laying inhibition may be related with settling inhibition (indirect oviposition inhibition) or not (direct effect on oviposition behavior). In vivo (In planta) results supported previous results obtained under in vitro conditions.

**Table 5.** Regarding to settling inhibition, geraniol had much better performance than *Eucalyptus* oil. In contract, *Eucalyptus* oil inhibited oviposition was more than geraniol. The efficacy of composition with 0.06% concentration, much lower than active ingredient independently, on both settling and oviposition was higher than the two positive controls tested.

**Table 7** shows the summary of mode of action (MoAs) proposed for biopesticide composition according to the results reported here. The combination of the active ingredients (blend) allows the final biopesticide formulation to have different and more powerful MoAs than the active ingredients independently.

**Table 7. Summary of MoAs for biopesticide composition**

| Mode of action | Mechanism of action | Reaction | Main ingredient involved | Side ingredient involved |
|---|---|---|---|---|
| Physical (Contact) osmotic shock) | Cuticle/membrane disruption (Wax/Lipid solubilization) | Dehydration, osmotic shock | *Eucalyptus* oil | - |
| Behavioral (Antifeedant) | Interaction with gustatory and olfactory sensilla | Settling inhibition/ Feeding deterrence | Geraniol | *Eucalyptus* oil |
| | | Oviposition inhibition | *Eucalyptus* oil | Geraniol |

### 4.3 Knock-down bioassays

Furthermore, the composition of the present invention was tested to evaluate its knock-down effect in the contact mortality assays of individual active ingredients and blend. Mortality, as in bioassay of contact mortality, was assessed at 1, 2, 4, 6, 8, 16 and 24 hours after spraying the blend of *Eucalyptus* oil and geraniol. In the case of individual active ingredients *(Eucalyptus* oil and geraniol), we used the dose that give major activity in contact (topical) assays 1% w/v **Table 4.** Blend was prepared at 0.06:0.06 %w/v *(Eucalyptus* oil: geraniol) for the bioassays with the biopesticide composition.

Knock-down effect of *Eucalyptus* oil and geraniol are shown in **Figures 7** and **8,** respectively. Smoothed knockdown curve with a slow and gradual increase in the mortality along the time was observed for both ingredients. The same behavior was stated in the case of biopesticide composition **(Figure 9).** Abrupt curves showing high mortalities within oner hour are indicative of neurotoxic effects. However, smoothed curves could be used as indicative of non-toxic mode of action.

## Example 5: Evaluation of synergistic effect

Several embodiments in the present invention show surprisingly the interaction between two compounds such as an essential oil from plants and a terpene. Due to said interaction, synergistic effect is generated.

Several mathematical methods are available for testing the additivity of pesticide composition, in the present invention have tested the following methods in order to demonstrate the synergistic effect:

• **The Limpel equation**

A method designed by Limpel et al. 1962, which facilitates calculating expected response of pesticide combination, as follow:

If X= the percent of efficiency by substance A, and Y= the percent of efficiency by substance B, and E= the expected percent of efficiency by mixing A and B

$$E = X + Y - \frac{X.Y}{100}$$

When the observed response is greater than expected, the combination is synergistic; when less than expected, it is antagonistic. If the observed and expected responses are equal, the combination is additive.

• **Isobole method**

Currently, this is the method mostly used to demonstrate synergistic effect in a combination (Williamson 2001). Although more complicated, is independent of the mechanism of action and applies under most conditions. It also makes no assumptions as to the behavior of each component and is, therefore, applicable to multiple component mixtures. An isobole is an iso-effect curve, in which a combination of components is represented on a graph, the axes of which are the dose- axes of the individual component. If the components do not interact, the isobole; referred to the line joining the points representing the combination to those on the dose taxes representing the individual doses with the same effect as the combination, it will be a straight line. If synergy is occurring, then the isobole will be a curve instead of a straight line and the curve is said to be 'concave'. The opposite applies for antagonism, in which the dose of the combination is greater than expected and produces a 'convex' isobole.

### 5.1 *Eucalyptus* oil: geraniol

The efficacy data (% contact mortality) obtained from **Table 4** are used for applying the Limpel equation, X *(Eucalyptus* oil) is 51,4% mortality related to 0,1%w/v dose, Y (geraniol) is 18,1% mortality related to 0,1%w/v dose, and E is the expected percent mortality by combination:

$$E = 51.4 + 18.1 - (51.4x18.1)/100 = \boldsymbol{60.19\%\ mortality}$$

The biopesticide composition (**Table 4**) is 0.09 % w/v dose closer to 0.1% w/v from each active ingredients, if we consider this dose, its mortality is 97.3%, significantly upper than the expected percent mortality. As a result, the biopesticide composition claimed in the present invention is synergistic.

In another case, the efficiency data (% Settling inhibition) obtained from **Table 5** are used in the Limpel equation; X *(Eucalyptus* oil) is 29.6 % antifeedant effect related to 0,1%w/v dose, Y (geraniol) is 70.6 % antifeedant effect related to 0,1%w/v dose, and E is the expected percent antifeedant effect by combination:

$$E = 29.6 + 70.6 - \frac{(29.6x70.6)}{100} = \boldsymbol{79.31\%\ antifeedant\ effect}$$

The biopesticide composition (**Table 5**) is 0.09 % w/v dose closer to 0.1 % w/v from each active ingredients, if we consider this dose, its antifeedant effect is 90.6%, significantly upper than the expected percent antifeedant effect. As a result, the biopesticide composition claimed in the present invention is synergistic.

**Table 8** shows the experimental (%M) percentage of mortality by contact against adults of *Tetranychus urticae*. *p<005, Wilcoxon signed-rank test. (%w/v). Tested for different combinations of active ingredients that can be found in

the biopesticide composition.

**Table 8. Contact mortality of tested combinations against *Tetranychus urticae***

| Synergic combination (*Eucalyptus* oil) + (Geraniol) | | Contact mortality (%M) |
|---|---|---|
| Dose of (*Eucalyptus* oil) (%w/v) | Dose of (Geraniol) (%w/v) | |
| 0.02 | 1.75 | 59.4 ± 3.4* |
| 0.03 | 1.10 | 50.3 ± 8.5* |
| 0.04 | 0.75 | 58.6 ± 2.3* |
| 0.06 | 0.42 | 53.2 ± 3.4* |
| 0.07 | 0.30 | 49.5 ± 3.2* |
| 0.08 | 0.10 | 47.8 ± 3.8* |

**(Figure 10)** The straight line joining the points representing $EC_{50}$ all combination doses to produce the additive effect if no interaction occurs, isobole. The pointed curve referred to $EC_{50}$ each of the tested combinations is concave. Synergy is shown by the concave curve or concave isobole, which the experimental percentage mortality by contact reach around 50% (**Table 8**) by low doses of both components in contrast to the $EC_{50}$ doses of independent components.

The isobole method can also be used to demonstrate synergistic effect by settling inhibition assays.

**Table 9** shown the experimental (%SI) percentage of settling inhibition against adults of *Tetranychus urticae.* *p<005, Wilcoxon signed-rank test. (%w/v) Tested for different combinations of active ingredients that can be found in the biopesticide composition.

**Table 9. Antifeedant effect of tested combinations against *Tetranychus urticae***

| Synergic combination (*Eucalyptus* oil) + (Geraniol) | | Settling inhibition (%SI) |
|---|---|---|
| Dose of (*Eucalyptus oil*) (%w/v) | Dose of (Geraniol) (%w/v) | |
| 0.28 | 0.006 | 50.1 ± 2.4* |
| 0.23 | 0.010 | 56.5 ± 4.8* |
| 0.17 | 0.015 | 57.9 ± 4.1* |
| 0.10 | 0.020 | 49.8 ± 1.7* |
| 0.05 | 0.025 | 52.3 ± 3.7* |
| 0.04 | 0.035 | 49.5 ± 2.0* |
| 0.01 | 0.040 | 53.1 ± 3.0* |

**(Figure 11)** The straight line joining the points representing $EC_{50}$ all combination doses to produce the additive effect if no interaction occurs, isobole. The pointed curve referred to $EC_{50}$ each of the tested combinations is concave. Synergy is shown by the concave curve or concave isobole, which the percentage settling inhibition related to the experimental antifeedant effect reach around 50% **(Table 9)** by low doses of both components in contrast to the $EC_{50}$ doses of independent components.

### 5.2 *Satureja montana* oil: geraniol

One embodiment of the present invention, *Satureja montana* essential oil (winter savory) was extracted from aerial parts during flowering by steam distillation.

Effective contact mortality dose ($EC_{50}$, dose needed to reach 50% of the effect) was calculated for *Satureja montana* oil (**Table 10**). In the case of geraniol, effective dose was as previously reported in **Table 4.**

**Table 10** shows the contact mortality on *Tetranychus urticae* obtained for *Satureja montana* oil, geraniol, and the blend *(Satureja montana* oil + geraniol). Mortality (%M) is corrected using Abbott's formula; Means within the same column followed by the same letter are not significantly different (ANOVA, Kruskall-Wallis, p<0.05).

**Table 10. Contact mortality of tested treatments against *Tetranychus urticae***

| Treatment | N° | Dose % (w/v) | Mortality (%M) |
|---|---|---|---|
| *Satureja montana* oil | 1 | 0.01 | 24.5 ± 4.4 [b] |
| | 2 | 0.02 | 44.1 ± 1.8 [c] |
| | 3 | 0.07 | 60.4 ± 3.8 [d] |
| | 4 | 0.10 | 62.5 ± 7.6 [d] |
| | $EC_{50}$ (%, w/v) = 0. 085 (0.07, 0.12) | | |
| geraniol | 5 | 0.10 | 18.1 ± 2.4 [a] |
| | 6 | 0.50 | 28.2 ± 3.2 [b] |
| | 7 | 1.0 | 43.9 ± 2.5 [c] |
| | $EC_{50}$ (%, w/v) = 2.44 (1.24, 4.75) | | |
| Blend (1:5) *Satureja montana* oil: geraniol | 9 | 0.1 : 0.5 | 98.1 ± 1.6 [e] |

**Table 11** shows the experimental contact mortality (%M) calculated for different combinations of active ingredients that can be found in *Satureja montana* oil: geraniol blend (*p<005, Wilcoxon signed-rank test).

**Table 11. Contact mortality of tested combinations against *Tetranychus urticae***

| Synergic combination (*Satureja montana* oil) + (geraniol) | | Contact mortality (%M) |
|---|---|---|
| Dose of (*Satureja montana* oil) (%w/v) | Dose of (Geraniol) (%w/v) | |
| 0.005 | 1.50 | 49.4 ± 5.2* |
| 0.01 | 1.00 | 54.1 ± 3.7* |
| 0.02 | 0.90 | 59.4 ± 8.5* |
| 0.03 | 0.60 | 49.4 ± 2.5* |
| 0.04 | 0.53 | 51.7 ± 3.2* |
| 0.07 | 0.30 | 52.7 ± 2.0* |
| 0.06 | 0.35 | 54.1 ± 5.6* |
| 0.08 | 0.12 | 50.0 ± 2.2* |

The efficacy data (% contact mortality) obtained from **Table 10** are used for applying the Limpel equation; X *(Satureja montana* oil) is 62.5 % mortality related to 0,1%w/v dose, Y (geraniol) is 28.2 % mortality related to 0,5%w/v dose, and E is the expected percent mortality by combination:

$$E = 62.5 + 28.2 - (62.5x28.2)/100 = \mathbf{73.08}\%\ \boldsymbol{mortality}$$

The biopesticide composition **(Table 10)** is 0.1 % w/v dose for *Satureja montana oil* and 0.5% for geraniol, if we consider this dose, its mortality is 98.1%, significantly upper than the expected percent mortality. As a result, the biopesticide composition claimed in the present invention shows synergistic effect.

**Figure 12.** The black double-headed line connects A with B and means all the combinations (pairs of doses) of A and B, theoretically able to obtain the same effects (50%). In the example, *Saturaja montana* oil is 0.085% (concentration given 50% of contact mortality) and geraniol is 2.44%.

If experimentally (**Table 11**), 50% of mortality are achieved at lower concentrations (e.g., point S in Figure 12), them the given combination would show synergism. In the case of synergy between two ingredients, the curve will be an upward concave.

If we apply the Combination Index (I) proposed by Chou and Talalay (1983):

$$CI = \frac{D1}{IDx1} + \frac{D2}{IDx2}$$

Where, *D1* and *D2* are the concentrations of *Satureja montana* oil and geraniol that produce an effect if applied together; *IDx1* and *IDx2* are the concentrations that produce the same effect when given alone. For example, in the case of point S (**Figure 12**) would be:

$$CI = \frac{0.02}{0.085} + \frac{0.9}{2.44}$$

CI value is 0.595. According to Chou and Talalay (1983), CI can take values between 0 and 1 for synergy.

### *5.3 Ocimun basilicum oil:* carvacrol

One embodiment of the present invention, *Ocimum basilicum* essential oil (basil) was extracted from aerial parts by steam distillation. Effective contact mortality dose ($EC_{80}$, dose needed to reach 80% of the effect) was calculated for *Ocimum basilicum* oil and carvacrol (**Table 12**). Mortality (%M) is corrected using Abbott's formula; Means within the same column followed by the same letter are not significantly different (ANOVA, Kruskall-Wallis, p<0.05).

**Table 12. Contact mortality of tested treatments against *Tetranychus urticae***

| Treatment | N° | Dose % (w/v) | Mortality (%M) |
|---|---|---|---|
| *Ocimun basilicum* oil | 1 | 0.01 | 19.4 ± 3.8 |
| | 2 | 0.05 | 27.7 ± 4.1 |
| | 3 | 0.10 | 40.6 ± 3.3 |
| | 4 | 0.50 | 60.1 ± 2.4 |
| | 5 | 1.0 | 71.4 ± 0.7 |
| | 6 | 1.5 | 82.5 ± 2.7 |
| | $EC_{50}$ (%, w/v) = 1.37 (1.0, 2.3) | | |
| Carvacrol | 7 | 0.01 | 38.9 ± 5.1 |
| | 8 | 0.05 | 47.1 ± 7.2 |
| | 9 | 0.10 | 66.8 ± 5.3 |
| | 10 | 0.50 | 80. 3 ± 4.4 |
| | 11 | 1.0 | 100.0 ± 0.0 |
| | $EC_{50}$ (%, w/v) = 0.55 (0.42, 0.8) | | |

**Table 13** shows the experimental contact mortality (%M) calculated for different combinations of active ingredients that can be found in *Ocimum basilicum* oil: Carvacrol blends (*p<005, Wilcoxon signed-rank test).

**Table 13. Contact mortality for tested combinations against *Tetranychus urticae***

| Synergic combination *(Ocimum basilicum* oil) + (Carvacrol) | | Contact mortality (%M) |
|---|---|---|
| Dose of (*Ocimun basilicum* oil) (%w/v) | Dose of (Carvacrol) (%w/v) | |
| 1.0 | 0.005 | 78.5 ± 6.1* |
| 0.9 | 0.01 | 82.5 ± 2.2* |
| 0.8 | 0.04 | 79.6 ± 4.4* |
| 0.7 | 0.06 | 80.3 ± 1.2* |

(continued)

| Synergic combination *(Ocimum basilicum* oil) + (Carvacrol) | | Contact mortality (%M) |
|---|---|---|
| Dose of (*Ocimun basilicum* oil) (%w/v) | Dose of (Carvacrol) (%w/v) | |
| 0.5 | 0.08 | 81.6 ± 3.8* |
| 0.1 | 0.10 | 78.5 ± 3.1* |
| 0.05 | 0.20 | 84.1 ± 4.2* |

**Figure 13.** shows the black double-headed line connects A with B and means all the combinations (pairs of doses) of A and B, theoretically able to obtain the same effects (80%). In the example, *Ocimum basilicum* oil is 1.37% (concentration given 80% of contact mortality) and Carvacrol is 0.55%.

If experimentally (**Table 13**), 80% of mortality are achieved at lower concentrations (e.g., point S in Figure 13), them the given combination would show synergism. In the case of synergy between two ingredients, the curve will be an upward concave.

If we apply the Combination Index (I) proposed by Chou and Talalay (1983):

$$CI = \frac{D1}{IDx1} + \frac{D2}{IDx2}$$

Where, *D1* and *D2* are the concentrations of *Ocimum basilicum* oil and Carvacrol that produce an effect if applied together; *IDx1* and *IDx2* are the concentrations that produce the same effect when given alone. For example, in the case of point S (Figure 13) would be:

$$CI = \frac{0.1}{1.37} + \frac{0.1}{0.55}$$

CI value is 0.407. According to Chou and Talalay (1983), CI can take values between 0 and 1 for synergy.

Therefore, the synergy effect is expected in the blend between *Ocimum basilicum* oil and the monoterpene Carvacrol, reaching elevate efficacies based on contact mortality.

**<u>Example 6: Biopesticide composition against spider mites</u>**

In some embodiments of the present invention, several field trials were carried out for the composition obtained in manufacturing process of the example 3 to assay biopesticide activity.

**Biopesticide composition against *Tetranychus urticae* in indoor tomato *(Lycopersicon esculentum)***

Since the composition of example 5.1 was tested to determinate selectivity and efficacy against *Tetranychus urticae* on tomato in greenhouse. The product was compared with a negative control (untreated plants) and a positive control based on bifenazate such as is showed in **Table 14.**

A randomised complete block design was done, with 4 replications per treatment. Elemental plots were 12 $m^2$ with 12 plants per plot. Two foliar spray applications (application codes A and B shown in **table 14)** were conducted using a knapsack sprayer (Maruyama), with 400 kPa of pressure and 600 l/ha of water volume for the first and 750 l/ha of water volume second application. The first application was conducted at the first presence of the pest and second application was applied after 7 days.

On 25 leaflets per plot with similar development stage, 6 assessments were carried out application A; before the application, at 3 days after application (3 DA-A) and at 7 days after application (7 DA-A). In the case of application B; at 3 days after application (3 DAB), at 7 days after application (7 DA-B) and 14 days after application (14 DA-B). This assessment is designed to test the number of alive adults per leaflet, the number of nymphs per leaflet, the number of eggs per leaflet and the number of motile forms (nymphs+adults) per leaflet. Efficacy is expressed according to Abbott's formula due to the uniformity of the pest at the beginning of the trial.

**Table 14. Applications for tested combinations against adults of *Tetranychus urticae***

| Treatment | Rate | Application code | Decrease in number of alive adults per leaflet | | | | |
|---|---|---|---|---|---|---|---|
| | | | 3 DA-A | 7 DA-A | 3 DA-B | 7 DA-B | 14DA-B |
| Negative control | | | 0% | 0% | 0% | 0% | 0% |
| Composition | 1,5 ml/l | AB | 53% | 80% | 85% | 96% | 87% |
| Composition | 3 ml/l | AB | 71% | 91% | 97% | 100% | 100% |
| Composition | 6 ml/l | AB | 81% | 95% | 99% | 100% | 98% |
| Positive control | 0.2l/ha | AB | 83% | 96% | 98% | 100% | 92% |

As a result, **Table 14** shows statistically significant differences that were observed between treated and untreated plots from 3 DA-A until the end of the trial (14 DA-B). Furthermore, they were also observed among treated plots at 3 DA-A, 7 DA-A and 3 DAB. Applied at 6 ml/l, biopesticide composition in the present invention, obtained efficacies between 81-100% higher than it applied at 3 ml/l (71-100%), higher than it applied at 1,5 ml/l (53-96%) and similar to positive control.

**Table 15 Applications for tested combinations against nymphs of *Tetranychus urticae***

| Treatment | Rate | Application code | Decrease in number of alive nymphs per leaflet | | | | |
|---|---|---|---|---|---|---|---|
| | | | 3 DA-A | 7 DA-A | 3 DA-B | 7 DA-B | 14DA-B |
| Negative control | | | 0% | 0% | 0% | 0% | 0% |
| Composition | 1,5 ml/l | AB | 47% | 65% | 79% | 84% | 70% |
| Composition | 3 ml/l | AB | 64% | 75% | 92% | 88% | 82% |
| Composition | 6 ml/l | AB | 80% | 85% | 97% | 94% | 89% |
| Positive control | 0.2l/ha | AB | 86% | 88% | 92% | 91% | 80% |

Regarding the number of nymphs per leaflet **(Table 15)** through Student-Newman-Keuls test performed at 5%, statistically significant differences were observed between treated and untreated plots from 3 DA-A until the end of the trial. Furthermore, they were also observed among treated plots at 3 DA-A, 7 DA-A and 3 DA-B.

One embodiment in the present invention shows an effective dose response, biopesticide composition applied at 6 ml/l obtained efficacies between 80-97% higher than it applied at 3 ml/l (64-92%), higher than it applied at 1,5 ml/l (47-84%), and similar to positive control.

**Table 16 Applications for tested combinations against eggs of *Tetranychus urticae***

| Treatment | Rate | Application code | Decrease in number of alive eggs per leaflet | | | | |
|---|---|---|---|---|---|---|---|
| | | | 3 DA-A | 7 DA-A | 3 DA-B | 7 DA-B | 14DA-B |
| Negative control | | | 0% | 0% | 0% | 0% | 0% |
| Composition | 1,5 ml/l | AB | 30% | 54% | 63% | 81% | 76% |
| Composition | 3 ml/l | AB | 50% | 73% | 86% | 89% | 85% |
| Composition | 6 ml/l | AB | 76% | 85% | 90% | 92% | 92% |
| Positive control | 0.2l/ha | AB | 84% | 89% | 95% | 83% | 81% |

Regarding the number of eggs per leaflet **(Table 16)** shows statistically significant differences that were observed between treated plots and untreated from 3 DA-A until the end of the trial (14 DA-B. Furthermore, statistically significant differences were observed between treated plots.

The results are similar to before tests, adults and nymphs, the number eggs decrease more if the biopesticide composition is higher. Similarly, the results are comparable to positive control.

**Biopesticide composition against *Panonychus citri***

Since the composition of example 5.1 effectively killed *Panonychus citri.* Using 4cc of the test of composition (concentrations shown table 18) was applied in vegetal material (orange branch each one with 3 leaves) containing *Panonychus citri,* using an air-assisted Potter tower. Also, negative control (No treatment) and positive control (Spirodiclofen). When treated leaves are drought, they were deposited in labeled plastic tubes containing water to avoid dehydration. **Figure 14.**

**Table 18. Treatment**

| Treatment | Concentration |
|---|---|
| A | 2.0 ml/l |
| B | 3.0 ml/l |
| C | 4.0 ml/l |
| Positive control | 0.6 ml/l |
| Neqative control | - |

The efficacy composition was evaluated though mobility parameters by mites. The results were assessed by analysis of covariance because of previous results were statistically controlling for the effects of other continuous variables that are not of primary interest. In the case, to find means that are significantly different from each other, Tukey's test is used ($p \leq 0.05$).

The results are shown in the following table:

**Table 19. Results of assay**

| Treatment | Mobility *Panonychus citri* per Leaf after days application | | |
|---|---|---|---|
| | Pre-application | 1° day | 4° day |
| A | 23.7 | 17.5 | 9.5 |
| B | 17.2 | 12.6 | 7.7 |
| C | 12.3 | 8.7 | 5.4 |
| Positive control | 14.0 | 10.0 | 6.2 |
| Neqative control | 17.0 | 17.0 | 19.3 |

The conclusion was that the composition, example 5.1 in different concentrations (2, 3 and 4ml/l), was efficient for the control of *Panonuchis citri* comparing with positive control after 4 days application. Also, the composition had similar efficacy as positive control in lower concentrations. **Figure 15.**

**Biopesticide composition against *Brevipalpus chilensis***

Since the composition of example 5.1 effectively killed *Brevapalpus chilensis.* Using 2cc of the test of composition (concentrations shown **table 18**) was applied in vegetal material containing *Brevapalpus chilensis,* using an air-assisted Potter tower. In addition, negative control (No treatment) and positive control (Spirodiclofen). When treated leaves are drought, they were deposited in glass tubes containing water to avoid dehydration. **Figure 16.**

The efficacy composition was evaluated though mobility parameters by mites. The results were assessed by analysis of covariance because of previous results were statistically controlling for the effects of other continuous variables that are not of primary interest. In this case, to find means that are significantly different from each other, Tukey's test is used ($p \leq 0.05$).

The results are shown in the following table:

**Table 20. Results of assay**

| Treatment | Mobility *Brevapalpus chilensis* per Leaf after days application | | |
|---|---|---|---|
| | Pre-application | 1° day | 4° day |
| A | 20.0 | 15.6 | 11.2 |
| B | 14.8 | 10.2 | 4.8 |
| C | 19.2 | 18.4 | 4.2 |
| Positive control | 24.8 | 22.6 | 6.0 |
| Neqative control | 27.6 | 33.6 | 23.6 |

The conclusion was that the composition, example 5.1 in different concentrations (2, 3 and 4ml/l), was efficient for the control of *Brevapalpus chilensis* comparing with positive control after 4 days application. Furthermore, the composition had similar efficacy as positive control in adults.

**Biopesticide composition against *Olygonychus yothersi***

Since the composition of example 5.1 effectively killed *Olygonychus yothersi.* Using 4cc of the test of composition (concentrations shown **table 18**) was applied in each leaf of *Persea americana* containing *Olygonychus yothersi,* using an air-assisted Potter tower. In addition, negative control (No treatment) and positive control (Spirodiclofen). When treated leaves are drought, they were deposited in labeled plastic tubes containing water to avoid dehydration. **Figure 17.**

The efficacy composition was evaluated though mobility parameters by mites. The results were assessed by analysis of covariance because of previous results were statistically controlling for the effects of other continuous variables that are not of primary interest. In this case, to find means that are significantly different from each other, Tukey's test is used ($p \leq 0.05$).

The results are shown in the following table:

**Table 21. Results of assay**

| Treatment | Mobility *Olygonychus yothersi* after days application | | |
|---|---|---|---|
| | Pre-application | 1° day | 4° day |
| A | 34.4 | 20.6 | 10.2 |
| B | 57.4 | 30.4 | 16.8 |
| C | 57.4 | 31.6 | 16.6 |
| Positive control | 37.6 | 23.0 | 11.2 |
| Neqative control | 52.6 | 56.6 | 62.2 |

The conclusion was that the composition, example 5.1 in different concentrations (2, 3 and 4ml/l), was efficient for the control of *Olygonychus yothersi* comparing with positive control in laboratory environment.

**References**

This list of references cited by the applicant is for the readers convenience only. It does not form part of the European patent document. Even though great care has been taken in compiling the references, errors or omissions cannot be excluded and the EPO disclaims all liability in this regard.

**Patent documents cited in the description**


- EP0869714 A (VITA (EUROPE)) 12.06.1997.

**Non-patent literature cited in the description**


- Meck, E.D., Walgenbach, J.F., Kennedy, G.G. Effect of vegetation management on autumn dispersal of Tetranychus urticae (Acari: Tetranychidae) from tomato. J. Appl. Entomol.2009 133, p. 742-748.
- Wyman, J.A., Oatman, E.R., Voth, V. Effects of varying twospotted spider mite infestation levels on strawberry yield. J. Econ. Entomol. 1979. 72, p.747e753.
- Walsh, D.B., Zalom, F.G., Shaw, D.V. Interaction of the twospotted spider mite (Acari: Tetranychidae) with yield of day-neutral strawberries in California. J. Econ. Entomol. 1998. 91, p.678-685.
- Park, Y.-L., Lee, J.-H. Impact of twospotted spider mite (Acari: Tetranychidae) on growth and productivity of glasshouse cucumbers. J. Econ. Entomol. 2005 98, p.457-463.
- Padilha, g.; Fiorin, r.a.; Filho, a.c.; Pozebon, h.; Rogers, j.; Marques, r.p.; Castilhos, l.b.; Donatti, a.; Stefanelo, l.; Burtet, l.m.; Stacke, r.f.; Guedes, j.v.c.; Arnemann, j.a . Damage assessment and economic injury level of the two-spotted spider mite Tetranychus urticae in soybean. Pesquisa AgropecuÃria Brasileira, 2020 v.55, p.01836.
- Badawy, et al. Acaricidal and quantitative structure activity relationship of monoterpenes against the two-spotted spider mite, Tetranychus urticae Exp Appl Acarol. 2010, no.52, p.261-274.
- Camilo et al. Acaricidal activity of essential oils. Trends Phytochem. Res. 1(4) 2017 183-198.
- S.A.M. Abdelgaleil, M.E.I. Badawy, N.F. Mahmoud, et al Acaricidal activity, biochemical effects and molecular docking of some monoterpenes against two-spotted spider mite Tetranychus urticae Koch. Pesticide Biochemistry and Physiology. 2019.
- Asmae Bakkali Aissaoui, Said Zantar and Amal Elamrani. Chemical composition and potential acaricide of Salvia officinalis and Eucalyptus globulus on Tetranychus urticae Koch (Acarina: Tetranychidae). J. of App. Chem. and Env. Prot., 2019, 4(1), p. 1-15.
- Arvind Saroj, et al. Natural Remedies for Pest, Disease and Weed Control ‖ Phytochemicals of Plant-Derived Essential Oils. Elsevier Inc., 2020. p.65-79.
- Lamy, et al. Artificially applied plant volatile organic compounds modify the behavior of a pest with no adverse effect on its natural enemies in the field. J Pest Sci. 06/07/2016.
- Banji Adaramola and Adebayo Onigbinde. Influence of extraction technique on the mineral content and antioxidant capacity of edible oil extracted from ginger rhizome. Chemistry International 2017 3(1) 1.
- Qing-Wen Zhang, Li-Gen Lin and Wen-Cai Ye. Techniques for extraction and isolation of natural products: a comprehensive review. Chinese Medicine 2018 13:20
- Limpel, L. E.; Schuldt, P. H.; Lamont, D. Weed control by dimethyl tetrachloroterephthalate alone and in certain combinations. Proc. North. Weed Control Conf., v. 16, p. 48-53, 1962.
- Ting-Chao Chou; Paul Talalay . Analysis of combined drug effects: a new look at a very old problem. Trends in Pharmacological Sciences. Volume 4, 1983, Pages 450-454
- Hugo Alfonso Rojas-Sarmiento. Selective hydrogenation of citral in liquid phase over ir-fe/tio2 reduced at high temperature. Revista colombiana de química, volumen 34, no. 2 de 2005.
- John C. Wickham, Peter R. Chadwick and Duncan C. Stewart. Factors which Influence the Knockdown Effect of Insecticide Products. Pestic. Sci. 1974, 5, 657-664.
- Essam Enan. Insecticidal activity of essential oils: octopaminergic sites of action. Comparative Biochemistry and Physiology Part C 130 2001 325 -337.
- Milena Jankowska, Justyna Rogalska, Joanna Wyszkowska and Maria Stankiewicz. Molecular Targets for Components of Essential Oils in the Insect Nervous System-A Review. Molecules 2018, 23, 34.
- Hyun Sik Roh, Eu Gene Lim, Jinwoo Kim and Chung Gyoo Park. Acaricidal and oviposition deterring effects of santalol identified in sandalwood oil against two-spotted spider mite, Tetranychus urticae Koch (Acari: Tetranychidae) J Pest Sci (2011) 84:495-501.
- Abd El-moneim Mrafifyafatma Salibafturkya. Control of Tetranychus urticae Koch by extracts of three essential oils of chamomile, marjoram and Eucalyptus. Asian Pacific Journal of Tropical Biomedicine Volume 2, Issue 1, January 2012, Pages 24-30.
- Sebe Brown, David L.Kerns, Jeffrey Gore, Gus Lorenz and Scott Stewart. Susceptibility of twospotted spider mites (Tetranychus urticae) to abamectin in Midsouth cotton. Crop Protection Volume 98, August 2017, Pages 179-183.
- Liliana Ruiz-Vasquez, Matías Reina , Victor Fajardo, Matías Lopez and Azucena Gonzalez-Coloma. Insect Antifeedant Components of Senecio fistulosus var. fistulosus-Hualtata. Plants 2019, 8(6), 176.
- Ricardo A. Rincón, Daniel Rodriguez and Ericsson Coy-Barrera. Botanicals Against Tetranychus urticae Koch Under Laboratory Conditions: A Survey of Alternatives for Controlling Pest Mites. Plants 2019, 8(8), 272.
- Murray Isman. Insect antifeedants. Pesticide Outlook, 2002 13(4), 152-157
- E. M. Williamson. Synergy and other interactions in phytomedicines. Phytomedicine 2001, Vol. 8(5), pp. 401-409

- Chas. F. Henderson and Elvin W. Tilton. Tests with Acaricides against the Brown Wheat Mite. Journal of economic entomology. Vol. 48, No.2 P.157-161


## Claims

1. Biopesticide composition with synergistic effect for combating and controlling pests and treating diseases in plant containing:

    essential oil or active ingredients thereof and,
    terpene component or a composition where its active ingredient is said terpene component.

2. The biopesticide composition according claim 1 wherein the composition further comprises additive components selected from a group consisting of emulsifiers, spreaders, penetrants, wetting silicone-based nonionic surfactants and water.

3. The biopesticide composition according to claim 1 wherein essential oil is selected from a group consisting of species: *Aframomum corrorima, Alpiniae zerumbet, Alpinia officinarum, Alpinia zerumbet, Alpinia galanga, Artemisia tridentata, Artemisia vulgaris, Artemisia annua, Artemisia californica, Artemisia maritima, Baeckea frutescens, Callistemon viminalis, Cannabis sativa, Cannabis indica, Cannabis ruderalis, Cinnamomum camphora, Curcuma amada, Curcuma aromatica, Curcuma longa, Elettaria cardamomum, Eucalyptus cneorifolia, Eucalyptus dives, Eucalyptus dumosa, Eucalyptus flocktoniae, Eucalyptus globulus, Eucalyptus goniocalyx, Eucalyptus horistes, Eucalyptus kochii, Eucalyptus leucoxylon, Eucalyptus largiflorens, Eucalyptus mitcheliana, Eucalyptus oleosa, Eucalyptus oblonga, Eucalyptus polybractea, Eucalyptus radiata, Eucalyptus rossii, Eucalyptus sideroxylon, Eucalyptus smithii, Eucalyptus staigeriana, Eucalyptus spathulata, Eucalyptus tereticornis, Eucalyptus viridis, Hedychium coronarium, Helichrysum gymnocephalum, Hyptis suaveolens, Kaempferia galanga, Laurus nobilis, Melaleuca alternifolia, Melaleuca armillaris, Melaluca alternifolia, Melaleuca leucandendra, Mentha arvensis, Mentha pulegium, Myrtus communis, Ocimum basilicum, Ravensara aromatica, Rosmarinus officinalis, Salvia lavandulifolia, Salvia officinalis, Satureja montana, Thryptomene saxicola Turnera diffusa, Umbellularia californica and Zingiber officinale.*

4. The biopesticide composition according to claim 1 which terpene component is selected from a group consisting of anethole, b-ionone, borneol, camphor, carene, carotene, carvacrol, carvacrol acetate, carveol, carvone, caryophyllene, caryophyllene oxide chysanthenol, cinnamaldehyde, cis-verbenol, citronellol, citronellal, citral, cinnamic acid, cinnamyl alcohol, dihydrocarveol, eugenol, farnesol, geraniol, geranial, linalool, linalyl acetate, menthol, methyl cinnamate, myrcene, myrtenol, nerol, neral, nerolidol, patchouli alcohol, perillyl alcohol, phytol, pinene, pulegone, squalene, terpineol, thymol, thymol acetate, thymoquinone, and tocotrienol.

5. The Biopesticide composition according to claim 2, wherein emulsifier is one or more selected from acrylic derivatives, albumin, alkylphenol polyoxyethylene ether, benzyl alcohol, copolymers of vinyl acetate, polyoxyethylene fatty acid ester, glycerol, glycols, fatty alcohol, polyoxyethylene ether, lecithin, mannitol, monoglyceride stearate, polyalkylene oxide block copolymer, polyethylene, polyglycerin, fatty acid ester, polyoxyethylenated sorbitan esters, polyoxyethylene, ether, polyvinyl alcohols, polyvinylpyrrolidone, sodium carboxymethylcellulose, sorbitan ester, sorbitan fatty acid, sorbitol, styrylphenol, and sucrose ester.

6. The Biopesticide composition according to claim 2, wherein silicone-based nonionic surfactant is one or more selected from modified polydimethylsiloxanes, organosilicones, polyalkylene modified heptamethyl trisiloxanes, polyalkylene oxide-modified dimethylpolysiloxanes, polyalkylene oxide-modified heptamethyl trisiloxanes, polyoxypropylene-polyoxyethylene block copolymers, polyether-polymethylsiloxane-copolymers, polyethoxylated dimethyl siloxanes, polymethylsiloxane copolymers, polyoxypropylene-polyoxyethylene block copolymers and silicone-polyether copolymers.

7. The biopesticide composition according to claim 1 to 6 wherein the composition is in the form of a powder, a granule, a pellet, a gel, an aqueous suspension, a solution, or an emulsion.

8. Use of biopesticide composition according to claim 1 to 7 in any stage of the plant life cycle; seed, germination, growth, reproduction, pollination, and seed spreading stages.

9. Use of biopesticide composition according to claim 8 for combating and controlling pests.

**10.** Use of biopesticide composition according to claim 9 pest is caused by arthropods.

**11.** Use of biopesticide composition with synergistic effect according to claim 10 wherein the arachnids are of the genera *Abacarus sp, Aberoptus sp., Acalitus sp., Acanthonychus sp., Acaphylla sp. Acaphyllisa sp., Acaralox sp., Acarelliptus sp., Acaricalus sp., Aceria sp., Achaetocoptes sp., Acritonotus sp., Aculochetus sp., Aculodes sp., Aculops sp., Aculus sp., Adenoptus sp., Aequsomatus sp., Afronobia sp., Allonychus sp., Amphitetranychus sp., Anatetranychus, Anthocoptes sp. Aplonobia sp., Aponychus sp., Atetranychus sp., Atrichoproctus sp., Bariella sp., Beerella sp, Boczekiana sp., Brachendus sp., Brevinychus sp, Brevipalpus., Bryobia sp. Bryobiella sp. Bryocopsis sp.* , *Calacarus sp., Calepitrimerus sp., Callyntrotus sp., Cecidophyes sp., Cecidophyopsis sp., Cisaberiptus sp.,Colomerus sp., Coptophylla sp., Cosetacus sp., Criotacus sp., Crotonella sp. Cupacarus sp., Cymoptus sp., Dasyobia sp., Dichopelmus sp., Ditrymacus sp.,Dolichonobia sp. Duplanychus sp. Edella sp., Eonychus sp., Eotetranychus sp., Epitrimerus sp., Eremobryobia sp.,Eriophyes sp., Eurytetranychoides sp, Eurytetranychus sp., Eutetranychus sp., Evertella sp., Gilarovella sp., Glyptacus sp., Hellenychus sp.,Hemibryobia sp., Hystrichonychus sp, Keiferella sp, Leipothrix sp., Lindquistiella sp, Liroella sp. Magdalena sp., Marainobia sp., Mesalox sp., Mesobryobia sp., Metaculus sp., Meyernychus sp., Mezranobia sp., Mixonychus sp., Monoceronychus sp., Monochetus sp., Mononychellus sp., Neooxycenus sp., Neoschizonobiella sp., Neotegonotus sp., Neotetranychus sp., Neotrichobia sp., Notonychus sp., Oligonychus sp., Oxycenus sp., Palmanychus sp., Panonychus sp., Parapetrobia sp., Paraphytoptus sp., Paraplonobia sp., Paraponychus sp., Peltanobia sp., Petrobia sp., Phyllocoptes sp., Phyllocoptruta sp, Platyphytoptus sp, Platytetranychus sp., Porcupinychus sp., Pseudobryobia sp., Reckella sp., Schizonobia sp., Schizonobiella sp., Schizotetranychus sp., Shevtchenkella sp., Sinobryobia sp., Sinotetranychus sp., Sonotetranychus sp., Stenacis sp., Strunkobia sp., Synonychus sp., Tauriobia sp., Tegolophus sp., Tegonotus sp., Tegoprionus sp., Tenuipalpoides sp., Tenuipalponychus sp., Tetra sp., Tetranychopsis sp., Tetranychus sp., Tetraspinus sp., Thamnacus sp., Toronobia sp. Tumescoptes sp. Vasates sp. Xinella sp., Yezonychus sp., and Yunonychus sp.*

**12.** Use of biopesticide composition with synergistic effect according to claim 9 to 11 for combating and controlling pests in all animal life cycle.

**13.** A method of combating and controlling pests which consists of applying a biopesticide composition according to claim 1 to 12 directly to the pests or to any kind of surfaces where pests o their eggs may contact or otherwise be exposed to the biopesticide composition.

**14.** A method of combating and controlling pests which consists of applying a biopesticide composition according to claim 13 by dripping, spraying and vaporization.

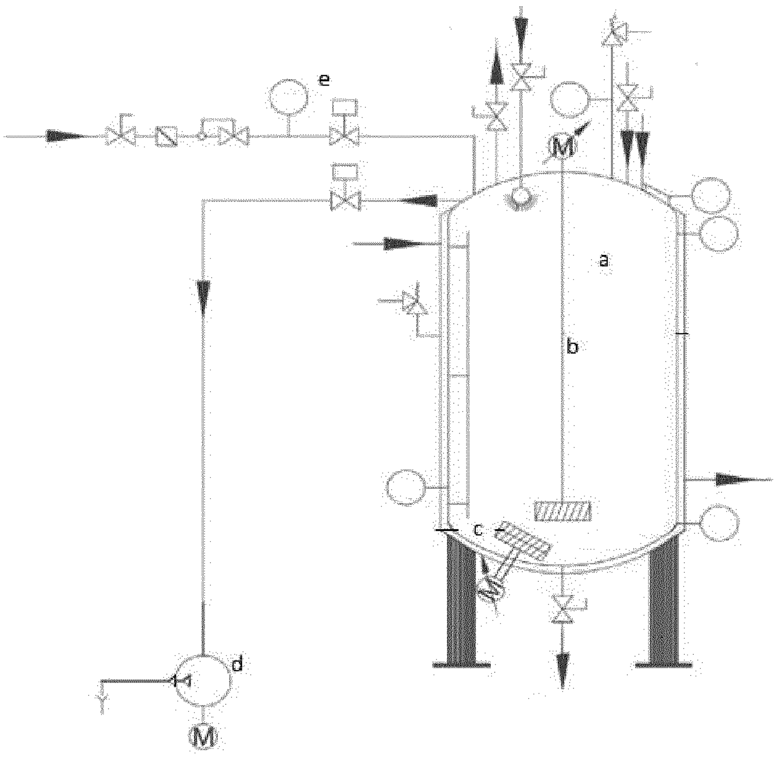


Fig.1

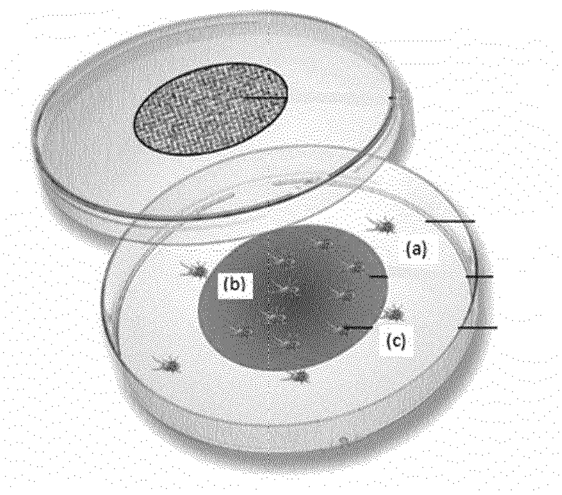


Fig.2

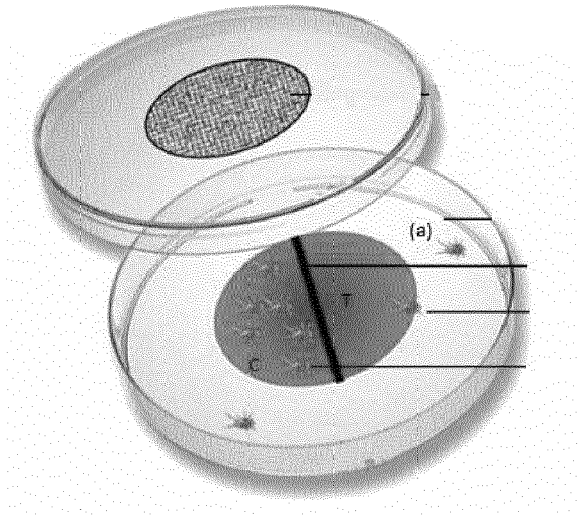


Fig.3

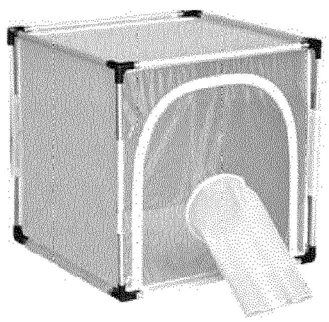

Fig.4

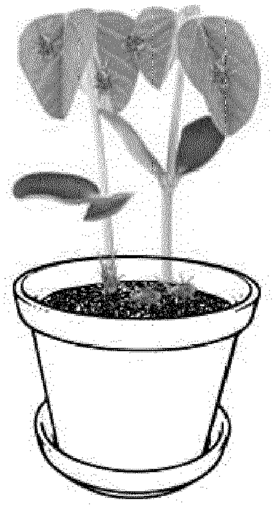

Fig.5

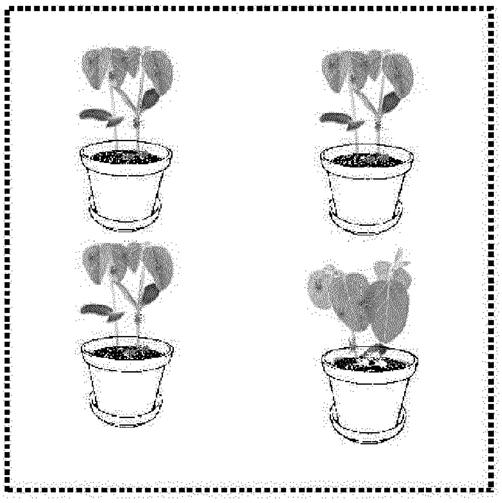

Fig.6

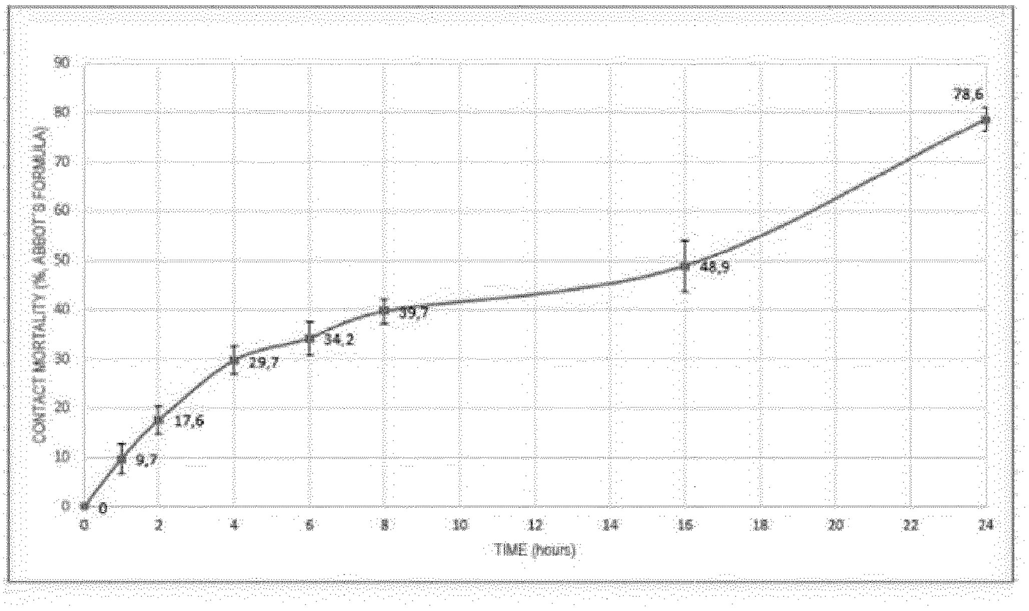
CONTACT MORTALITY (%, ABBOT'S FORMULA)
TIME (hours)
0
9,7
17,6
29,7
34,2
39,7
48,9
78,6

Fig.7

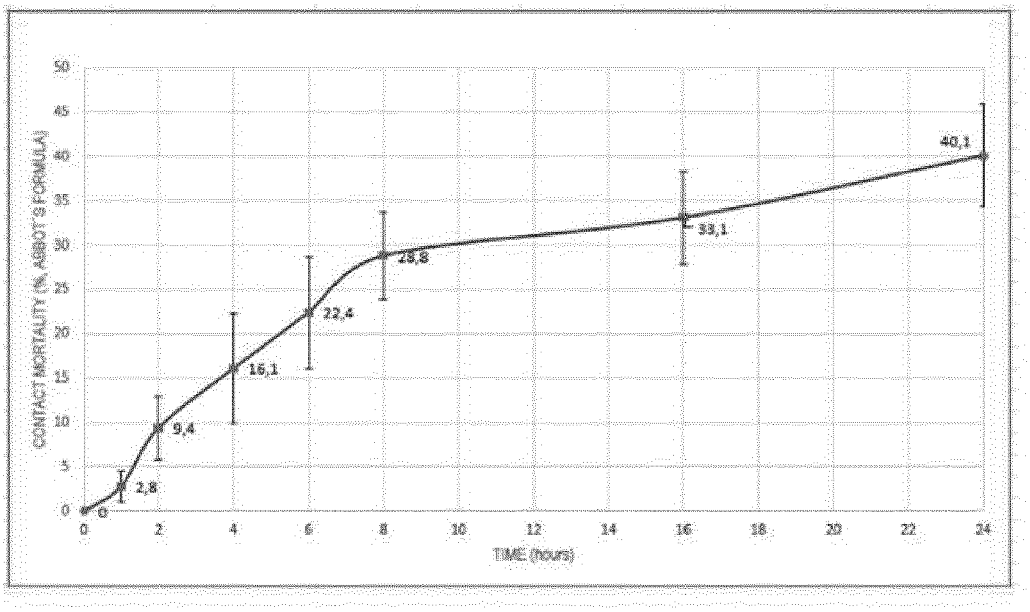
CONTACT MORTALITY (%, ABBOT'S FORMULA)
TIME (hours)
0
2,8
9,4
16,1
22,4
28,8
33,1
40,1

Fig.8

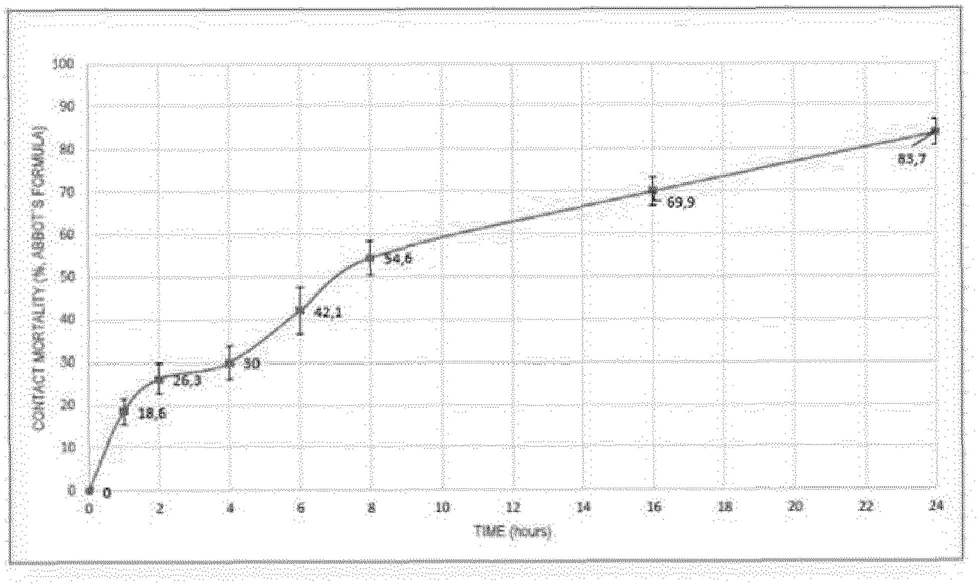
CONTACT MORTALITY (% ABBOT'S FORMULA)
TIME (hours)
0
18,6
26,3
30
42,1
54,6
69,9
83,7

Fig.9

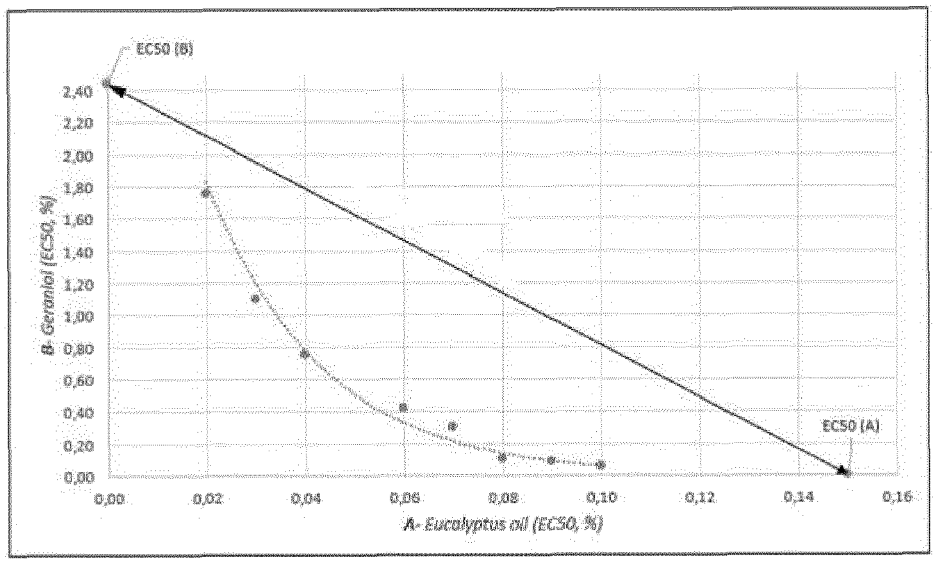
EC50 (B)
EC50 (A)
B- Geraniol (EC50, %)
A- Eucalyptus oil (EC50, %)

Fig.10

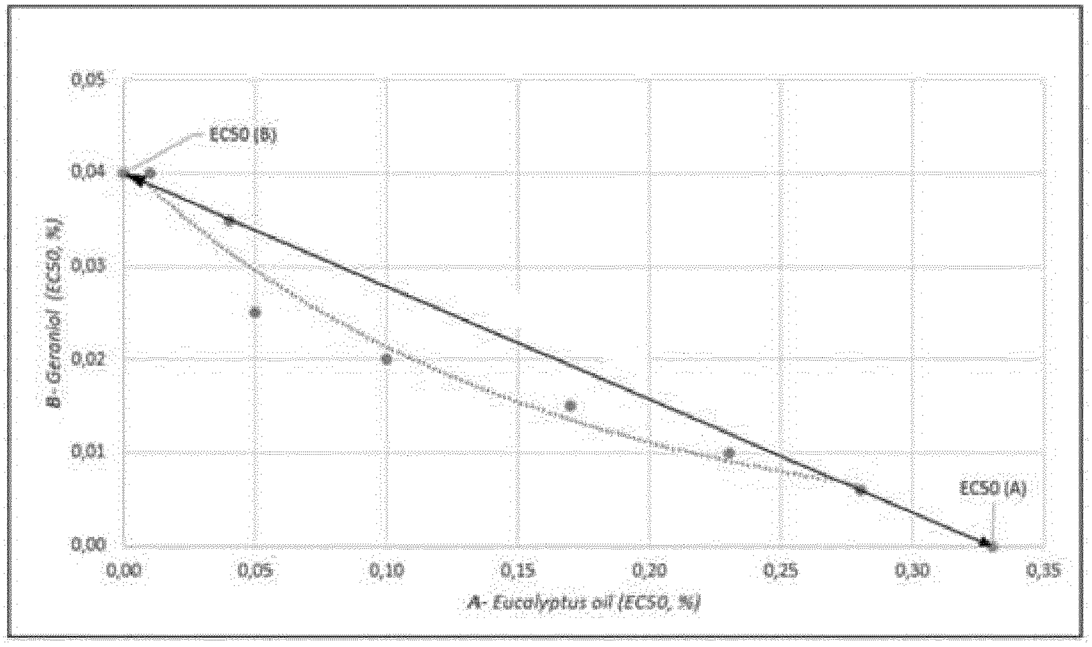
ECSO (B)
ECSO (A)
0,05
0,04
0,03
0,02
0,01
0,00
0,00
0,05
0,10
0,15
0,20
0,25
0,30
0,35
B- Geraniol (EC50, %)
A- Eucalyptus oil (EC50, %)

Fig.11

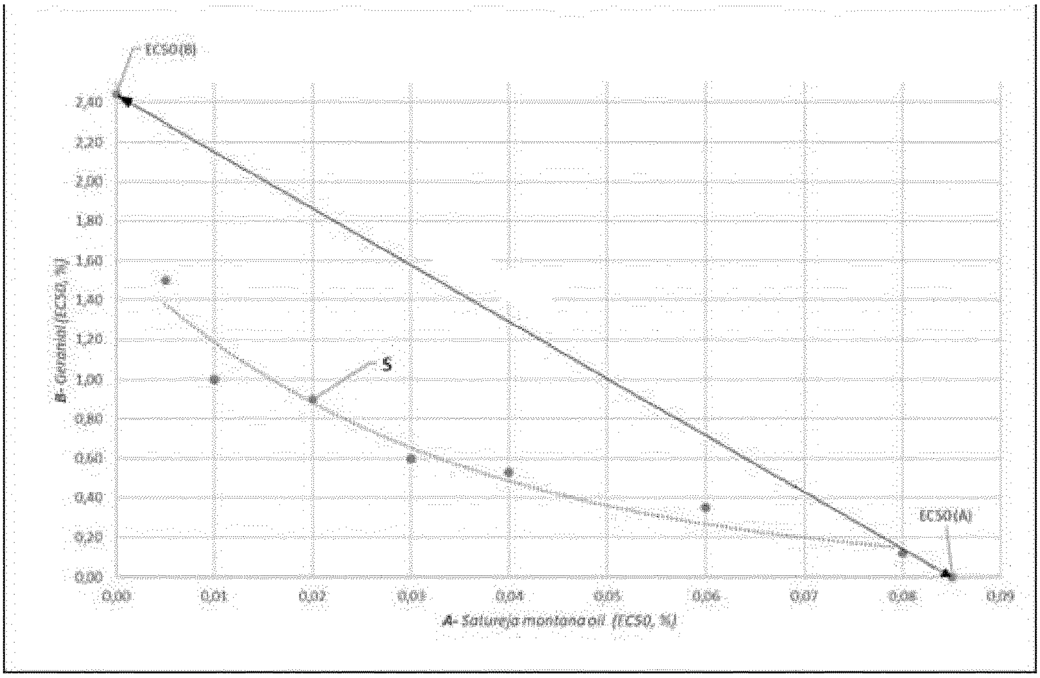
EC50(B)
EC50(A)
5
2,40
2,20
2,00
1,80
1,60
1,40
1,20
1,00
0,80
0,60
0,40
0,20
0,00
0,00
0,01
0,02
0,03
0,04
0,05
0,06
0,07
0,08
0,09
B- Geraniol (EC50, %)
A- Satureja montana oil (EC50, %)

Fig.12

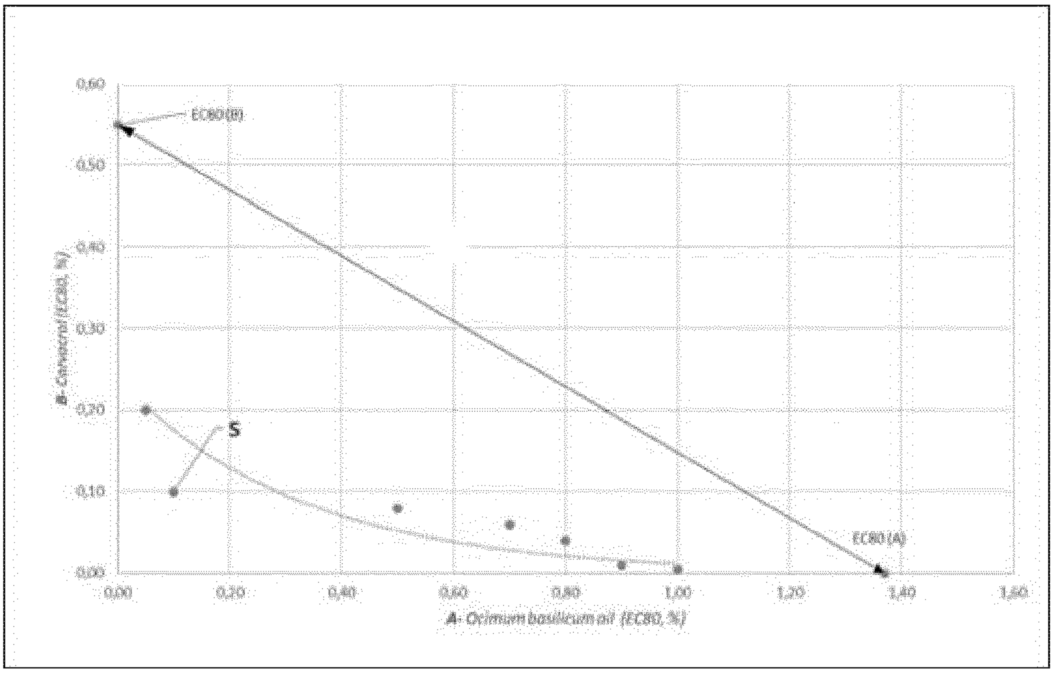
0,60
0,50
0,40
0,30
0,20
0,10
0,00
EC80 (B)
S
EC80 (A)
0,00
0,20
0,40
0,60
0,80
1,00
1,20
1,40
1,60
A- Ocimum basilicum oil (EC80, %)

Fig.13

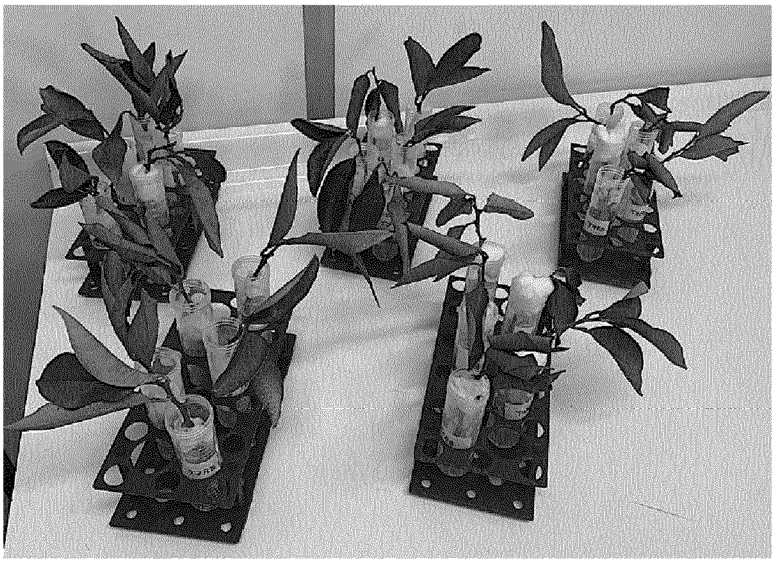

Fig.14

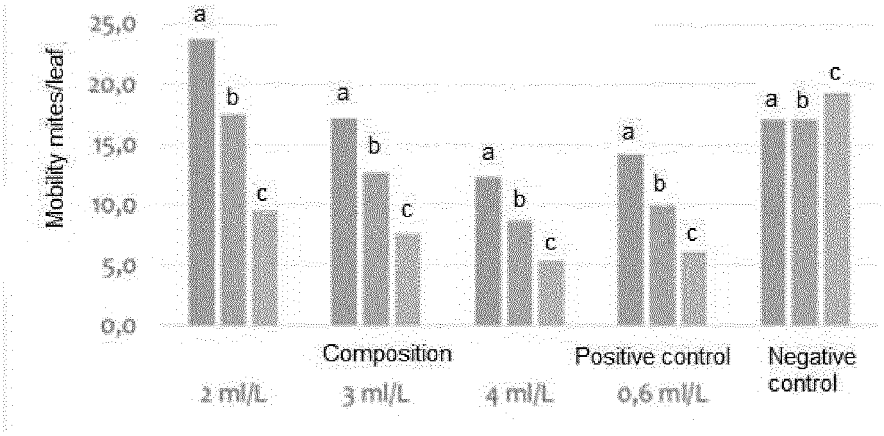
Mobility mites/leaf
25,0
20,0
15,0
10,0
5,0
0,0
a
b
c
Composition
Positive control
Negative control
2 ml/L
3 ml/L
4 ml/L
0,6 ml/L

Fig. 15

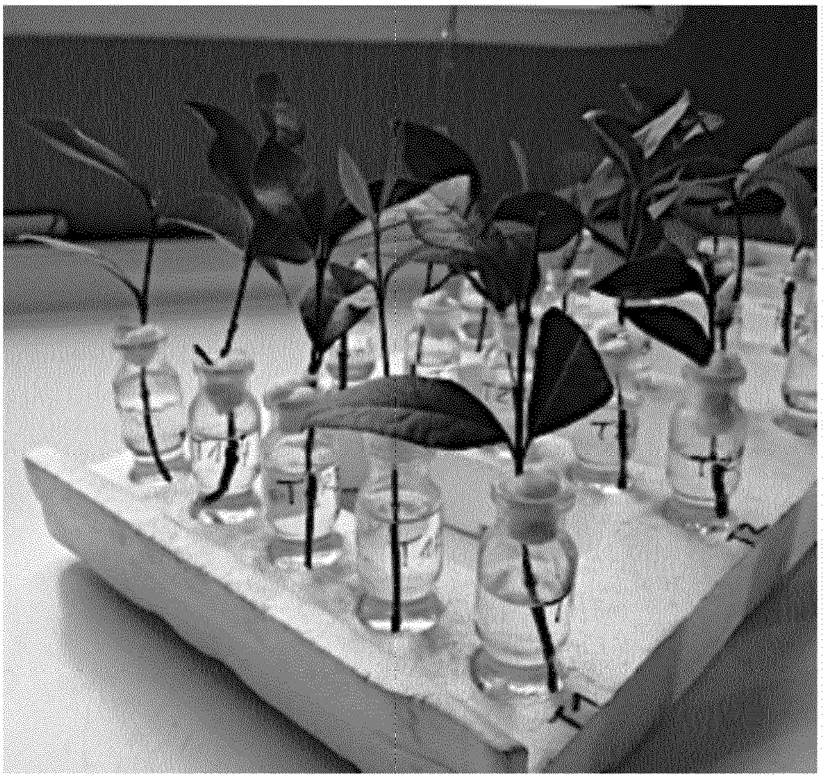

Fig. 16

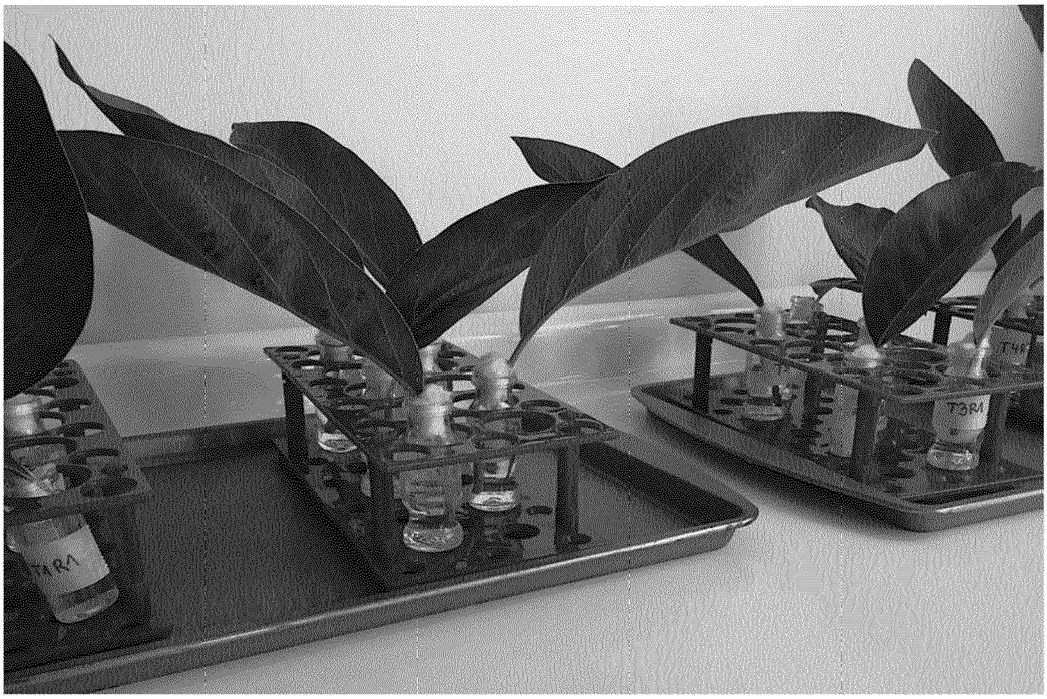

Fig.17

Europäisches Patentamt
European Patent Office
Office européen des brevets

# EUROPEAN SEARCH REPORT

Application Number
EP 22 38 2959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/038599 A1 (TYRATECH INC [US]; ENAN ESSAM [US]) 26 March 2009 (2009-03-26) | 1-14 | INV. A01P1/00 A01N65/00 A01P7/00 |
| Y | * the claims; the examples; paragraphs 2, 5-12, 208-260, 1059-1102 * | 1-14 | |
| X | US 2017/318806 A1 (KENNEDY KEITH [US] ET AL) 9 November 2017 (2017-11-09) | 1-14 | |
| Y | * the claims; the examples; table 3; paragraphs 37, 47-53, 78-80, 117, 126 * | 1-14 | |
| X | CN 112 335 691 A (BEIJING MAOSI TRADING CO LTD) 9 February 2021 (2021-02-09) | 1-14 | |
| Y | * the whole document * | 1-14 | |
| X | WO 2007/063268 A1 (EDEN RESEARCH PLC [GB]; FRANKLIN LANNY [US] ET AL.) 7 June 2007 (2007-06-07) | 1,2,4-14 | |
| Y | * the whole document * | 1-14 | |
| X | US 6 130 253 A (FRANKLIN LANNY UDELL [US] ET AL) 10 October 2000 (2000-10-10) | 1,2,4-14 | |
| Y | * the whole document * | 1-14 | TECHNICAL FIELDS SEARCHED (IPC) |
| Y | OPENDER KOUL ET AL: "Essential Oils as Green Pesticides: Potential and Constraints", BIOPESTIC. INT., vol. 4, no. 1, 1 January 2008 (2008-01-01), pages 63-84, XP055020764, ISSN: 0973-483X<br>* the whole document * | 1-14 | A01N |

The present search report has been drawn up for all claims

1

| Place of search | Date of completion of the search | Examiner |
|---|---|---|
| Munich | 13 March 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 38 2959

This annex lists the patent family members relating to the patent documents cited in the above-mentioned European search report. The members are as contained in the European Patent Office EDP file on
The European Patent Office is in no way liable for these particulars which are merely given for the purpose of information.

13-03-2023

| Patent document cited in search report | Publication date | Patent family member(s) | Publication date |
|---|---|---|---|
| WO 2009038599 A1 | 26-03-2009 | BR PI0809125 A2 | 11-10-2016 |
| | | CN 101730473 A | 09-06-2010 |
| | | CR 11074 A | 29-12-2009 |
| | | EP 2073632 A1 | 01-07-2009 |
| | | EP 3459352 A1 | 27-03-2019 |
| | | JP 2010522236 A | 01-07-2010 |
| | | US 2010303940 A1 | 02-12-2010 |
| | | WO 2009038599 A1 | 26-03-2009 |
| US 2017318806 A1 | 09-11-2017 | AU 2014238477 A1 | 15-10-2015 |
| | | AU 2017203324 A1 | 08-06-2017 |
| | | EP 2975943 A2 | 27-01-2016 |
| | | EP 3238542 A1 | 01-11-2017 |
| | | ES 2928440 T3 | 18-11-2022 |
| | | US 2016029625 A1 | 04-02-2016 |
| | | US 2017318806 A1 | 09-11-2017 |
| | | WO 2014146058 A1 | 18-09-2014 |
| | | WO 2014149138 A2 | 25-09-2014 |
| CN 112335691 A | 09-02-2021 | NONE | |
| WO 2007063268 A1 | 07-06-2007 | AP 2901 A | 31-05-2014 |
| | | AU 2006321416 A1 | 07-06-2007 |
| | | BR PI0619383 A2 | 27-09-2011 |
| | | EP 1954130 A1 | 13-08-2008 |
| | | JP 6027718 B2 | 16-11-2016 |
| | | JP 2009517447 A | 30-04-2009 |
| | | KR 20080086477 A | 25-09-2008 |
| | | KR 20140103191 A | 25-08-2014 |
| | | US 2010272818 A1 | 28-10-2010 |
| | | US 2014170198 A1 | 19-06-2014 |
| | | WO 2007063268 A1 | 07-06-2007 |
| US 6130253 A | 10-10-2000 | AT 281762 T | 15-11-2004 |
| | | AU 779144 B2 | 06-01-2005 |
| | | CA 2383541 A1 | 01-03-2001 |
| | | DE 60015776 T2 | 10-11-2005 |
| | | EP 1211938 A1 | 12-06-2002 |
| | | ES 2231194 T3 | 16-05-2005 |
| | | US 6130253 A | 10-10-2000 |
| | | WO 0113726 A1 | 01-03-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0869714 A


### Non-patent literature cited in the description


- **MECK, E.D. ; WALGENBACH, J.F. ; KENNEDY, G.G.** Effect of vegetation management on autumn dispersal of Tetranychus urticae (Acari: Tetranychidae) from tomato. *J. Appl. Entomol.,* 2009, vol. 133, 742-748
- **WYMAN, J.A. ; OATMAN, E.R. ; VOTH, V.** Effects of varying twospotted spider mite infestation levels on strawberry yield. *J. Econ. Entomol.,* 1979, vol. 72, 747e753
- **WALSH, D.B. ; ZALOM, F.G. ; SHAW, D.V.** Interaction of the twospotted spider mite (Acari: Tetranychidae) with yield of day-neutral strawberries in California. *J. Econ. Entomol.,* 1998, vol. 91, 678-685
- **PARK, Y.-L. ; LEE, J.-H.** Impact of twospotted spider mite (Acari: Tetranychidae) on growth and productivity of glasshouse cucumbers. *J. Econ. Entomol.,* 2005, vol. 98, 457-463
- **PADILHA, G. ; FIORIN, R.A. ; FILHO, A.C. ; POZEBON, H. ; ROGERS, J. ; MARQUES, R.P. ; CASTILHOS, I.B. ; DONATTI, A. ; STEFANELO, I. ; BURTET, I.M.** Damage assessment and economic injury level of the two-spotted spider mite Tetranychus urticae in soybean. *Pesquisa AgropecuÃria Brasileira,* 2020, vol. 55, 01836
- **BADAWY et al.** Acaricidal and quantitative structure activity relationship of monoterpenes against the two-spotted spider mite, Tetranychus urticae. *Exp Appl Acarol.,* 2010, vol. 52, 261-274
- **CAMILO et al.** Acaricidal activity of essential oils. *Trends Phytochem. Res.,* 2017, vol. 1 (4), 183-198
- **S.A.M. ABDELGALEIL ; M.E.I. BADAWY ; N.F. MAHMOUD et al.** Acaricidal activity, biochemical effects and molecular docking of some monoterpenes against two-spotted spider mite Tetranychus urticae Koch. *Pesticide Biochemistry and Physiology,* 2019
- **ASMAE BAKKALI AISSAOUI ; SAID ZANTAR ; AND AMAL ELAMRANI.** Chemical composition and potential acaricide of Salvia officinalis and Eucalyptus globulus on Tetranychus urticae Koch (Acarina: Tetranychidae). *J. of App. Chem. and Env. Prot.,* 2019, vol. 4 (1), 1-15
- **ARVIND SAROJ et al.** Natural Remedies for Pest, Disease and Weed Control ‖ Phytochemicals of Plant-Derived Essential Oils. Elsevier Inc, 2020, 65-79
- **LAMY et al.** Artificially applied plant volatile organic compounds modify the behavior of a pest with no adverse effect on its natural enemies in the field. *J Pest Sci.,* 06 July 2016
- **BANJI ADARAMOLA ; ADEBAYO ONIGBINDE.** Influence of extraction technique on the mineral content and antioxidant capacity of edible oil extracted from ginger rhizome. *Chemistry International,* 2017, vol. 3 (1), 1
- **QING-WEN ZHANG ; LI-GEN LIN ; WEN-CAI YE.** Techniques for extraction and isolation of natural products: a comprehensive review. *Chinese Medicine,* 2018, vol. 13, 20
- **LIMPEL, L. E. ; SCHULDT, P. H. ; LAMONT, D.** Weed control by dimethyl tetrachloroterephthalate alone and in certain combinations. *Proc. North. Weed Control Conf.,* 1962, vol. 16, 48-53
- **TING-CHAO CHOU ; PAUL TALALAY.** Analysis of combined drug effects: a new look at a very old problem. *Trends in Pharmacological Sciences,* 1983, vol. 4, 450-454
- **HUGO ALFONSO ; ROJAS-SARMIENTO.** Selective hydrogenation of citral in liquid phase over ir-fe/tio2 reduced at high temperature. *Revista colombiana de química,* 2005, vol. 34 (2
- **JOHN C. WICKHAM ; PETER R. CHADWICK ; DUNCAN C. STEWART.** Factors which Influence the Knockdown Effect of Insecticide Products. *Pestic. Sci.,* 1974, vol. 5, 657-664
- **ESSAM ENAN.** Insecticidal activity of essential oils: octopaminergic sites of action. *Comparative Biochemistry and Physiology Part C,* 2001, vol. 130, 325-337
- **MILENA JANKOWSKA ; JUSTYNA ROGALSKA ; JOANNA WYSZKOWSKA ; MARIA STANKIEWICZ.** Molecular Targets for Components of Essential Oils in the Insect Nervous System-A Review. *Molecules,* 2018, vol. 23, 34

- **HYUN SIK ROH ; EU GENE LIM ; JINWOO KIM ; CHUNG GYOO PARK.** Acaricidal and oviposition deterring effects of santalol identified in sandalwood oil against two-spotted spider mite, Tetranychus urticae Koch (Acari: Tetranychidae). *J Pest Sci,* 2011, vol. 84, 495-501
- **ABD EL-MONEIM ; MRAFIFYAFATMA SALIBAFTURKYA.** Control of Tetranychus urticae Koch by extracts of three essential oils of chamomile, marjoram and Eucalyptus. *Asian Pacific Journal of Tropical Biomedicine,* January 2012, vol. 2 (1), 24-30
- **SEBE BROWN ; DAVID L.KERNS ; JEFFREY GORE ; GUS LORENZ ; SCOTT STEWART.** Susceptibility of twospotted spider mites (Tetranychus urticae) to abamectin in Midsouth cotton. *Crop Protection,* August 2017, vol. 98, 179-183
- **LILIANA RUIZ-VASQUEZ ; MATÍAS REINA ; VICTOR FAJARDO ; MATÍAS LOPEZ ; AZUCENA GONZALEZ-COLOMA.** Insect Antifeedant Components of Senecio fistulosus var. fistulosus-Hualtata. *Plants,* 2019, vol. 8 (6), 176
- **RICARDO A. RINCÓN ; DANIEL RODRIGUEZ ; ERICSSON COY-BARRERA.** otanicals Against Tetranychus urticae Koch Under Laboratory Conditions: A Survey of Alternatives for Controlling Pest Mites. *Plants,* 2019, vol. 8 (8), 272
- **MURRAY ISMAN.** Insect antifeedants. *Pesticide Outlook,* 2002, vol. 13 (4), 152-157
- **E. M. WILLIAMSON.** Synergy and other interactions in phytomedicines. *Phytomedicine,* 2001, vol. 8 (5), 401-409
- **CHAS. F. HENDERSON ; ELVIN W. TILTON.** Tests with Acaricides against the Brown Wheat Mite. *Journal of economic entomology,* vol. 48 (2), 157-161